(19) Europäisches Patentamt
European Patent Office
Office européen des brevets

(11) Publication number: **0 549 808 A1**

(12) **EUROPEAN PATENT APPLICATION published in accordance with Art. 158(3) EPC**

(21) Application number: **92914921.9**

(22) Date of filing: **10.07.92**

(86) International application number: **PCT/JP92/00883**

(87) International publication number: **WO 93/01233 (21.01.93 93/03)**

(51) Int. Cl.5: **C08K 3/00**, C08K 13/02, C08L 25/00, C08L 31/00, C08L 33/00, C08L 75/00, C08L 101/00, G02B 1/10

(30) Priority: **10.07.91 JP 169648/91**
**10.07.91 JP 169649/91**
**10.07.91 JP 169650/91**
**10.07.91 JP 169656/91**
**11.07.91 JP 171122/91**
**28.11.91 JP 314768/91**

(43) Date of publication of application: **07.07.93 Bulletin 93/27**

(84) Designated Contracting States: **DE FR GB**

(71) Applicant: **SEIKO EPSON CORPORATION**
**4-1, Nishishinjuku 2-chome**
**Shinjuku-ku Tokyo 163(JP)**

(72) Inventor: **MIYABAYASHI, Toshiyuki**
**Seiko Epson Corporation, 3-5, Owa 3-chome**
**Suwa-shi, Nagano 392(JP)**
Inventor: **KUTSUKAKE, Yusuke**
**Seiko Epson Corporation, 3-5, Owa 3-chome**
**Suwa-shi, Nagano 392(JP)**
Inventor: **KASAI, Yoshihiko**
**Seiko Epson Corporation, 3-5, Owa 3-chome**
**Suwa-shi, Nagano 392(JP)**
Inventor: **KATAGIRI, Hiroshi**
**Seiko Epson Corporation, 3-5, Owa 3-chome**
**Suwa-shi, Nagano 392(JP)**
Inventor: **KOJIMA, Tadao**
**Seiko Epson Corporation, 3-5, Owa 3-chome**
**Suwa-shi, Nagano 392(JP)**

(74) Representative: **Strehl, Schübel-Hopf, Groening**
**Maximilianstrasse 54 Postfach 22 14 55**
**W-8000 München 22 (DE)**

(54) **TRANSPARENT PLASTIC MATERIAL.**

(57) A nearly colorless transparent plastic material usable as lens, filter and so forth, which can exhibit an antiglare effect without lowering the quantity of visible rays by using together a complex compound of a specified transition metal element and a dye or a pigment which absorbs a spectrum complementary to the absorption spectrum with a specified wavelength of the complex compound. The plastic material comprises a polymer prepared by polymerizing one or more polymerizable monomers in the presence of a polymerization initiator or catalyst, and the complex compound is represented by the general formula (A)nM, wherein A represents either a ligand selected from the group consisting of those giving chelate complexes having eight specified basic chemical structures and those giving organometallic complexes, or a ligand forming a cyclic ligand composed of nAs; M represents Sc, Y, La, Ce, Pr, Nd, Pm, Sm, Eu, Gd, Tb, Dy, Ho, Er, Tm, Yb, or Lu; and n represents 2, 3 or 4 depending on the kind of element.

EP 0 549 808 A1

FIG.1

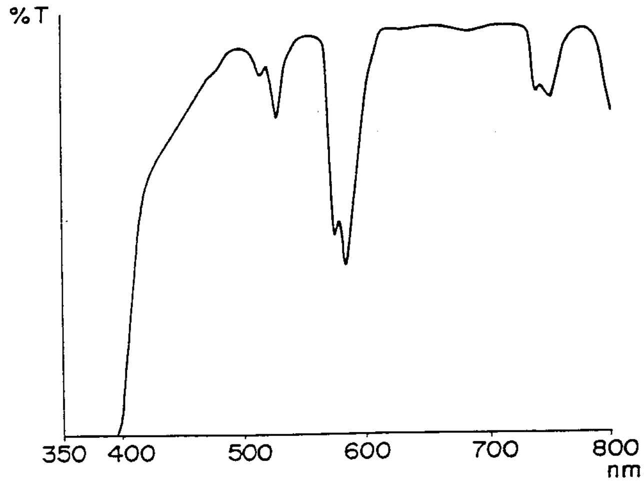

## Field of the Invention

This invention relates to a transparent plastic material having glare-proof properties to selectively reduce light of a specific wavelength which is dazzling to human eyes.

## Background of the Invention

In the state of light adaptation, human eyes perceive light in the vicinity of 555 nm (520 to 590 nm) in wavelength to be the brightest, and in the state of dark adaptation, perceive light in the vicinity of 507 nm (472 to 542 nm) in wavelength to be the brightest. Therefore, light of the above wavelengths is dazzling to human eyes. The glare of the light can be prevented by filtering the light of the above wavelengths.

However, to prevent the glare at the seashore in summer and at skiing grounds in winter, eyeglasses using colored lenses such as sunglasses are generally used. Such colored lenses have a problem in that they filter light of all of wavelengths uniformly, resulting in an insufficient light.

Since neodymium compounds tend to have a sharp absorption in the vicinity of 570 to 580 nm, they can selectively absorb light of wavelengths which are dazzling to human eyes. Therefore, utilizing such properties, neodymium compounds are incorporated in glass to endow eyeglass lenses and automobile mirrors with glare-proof properties. At the same time, introduction of neodymium compounds into transparent plastics to obtain highly transparent optical plastics with glare-proof properties has been investigated. Some examples are given below:

(1) Japanese Patent Publication 42-3949/1967 discloses a method for producing a light blocker in which an organic thin film from a water-soluble polyether containing a water-soluble rare metal salt such as neodymium or cerium is attached to the inner surface of a mold comprising glass or a metal, and a methacrylic ester or an acrylic ester and a prepolymer of an $\alpha,\beta$-unsaturated carboxylic acid are injected into the mold, followed by heat polymerization. Furthermore, (2) Japanese Patent Publication Laid-open 58-225148/1983 discloses a selective light absorbing resin composition for the visible light region comprising particles of a neodymium compound such as neodymium oxide, neodymium hydroxide, neodymium carbonate, neodymium phosphate, neodymium sulfate, neodymium chloride, or neodymium acetate having an average particle diameter of 0.2 to 20 $\mu$m dispersed in a transparent plastic matrix. Methods have also been disclosed for producing optical elements in which water-soluble metal salts such as neodymium acetate, neodymium chloride, neodymium nitrate, neodymium sulfate, and neodymium stearate are dissolved in a hydrophilic monomer such as 2-hydroxymethacrylate, methacrylic acid, or acrylic acid, and combined with another hydrophobic monomer. For example, (3) Japanese Patent Publication Laid-open 1-1601024 discloses a method for producing a glare-proofing plate or film which utilizes the fact that neodymium nitrate, which is considered to be poorly compatible with polymerizable monomers, is soluble in 2-hydroxyethylmethacrylate. A 2-hydroxyethylmethacrylate solution of neodymium nitrate is mixed with methylmethacrylate or acryl-diglycolcarbonate as a monomer, or with polyvinylalcohol as a polymer, heat polymerized and molded. Furthermore, (4) Japanese Patent Publication Laid-open 2-153301/1990 discloses a plastic-based optical element obtained by polymerizing a monomer mixture comprising at least one neodymium compound selected from the group consisting of neodymium acrylate and neodymium methacrylate, at least one unsaturated carboxylic acid selected from the group consisting of acrylic acid and methacrylic acid, and styrene or a styrene derivative.

However, conventional neodymium compounds such as neodymium oxide, neodymium carbonate, neodymium chloride, neodymium nitrate, neodymium sulfate, neodymium sulfide, neodymium oxalate, and neodymium acetate are poorly compatible with and sparingly soluble in typical polymerizable monomers such as diethyleneglycol-bisallylcarbonate, methylmethacrylate, and styrene which form transparent plastics. Therefore, when a mixture of these polymerizable monomers and a neodymium compound is polymerized, as is, in the method (2) above, the resulting polymer tends to be turbid or cloudy and is thus not suitable for use as an optical plastic. Furthermore, in the method (3) above, 2-hydroxyethylmethacrylate must always be present, which tends to have adverse effects on the properties of the resulting polymer. Specifically, since a polymer containing 2-hydroxyethyl-methacrylate has defects of high water absorption and poor thermal characteristics, the polymer tends to deform by water absorption or heating. Especially for optical elements, since such deformation directly affects the optical characteristics, deformation should be as small as possible. Moreover, in many cases, optical elements are provided on the surface of transparent plastic materials in the form of inorganic deposition films to provide an anti-reflection effect. However, when a deformation occurs in the substrate due to water absorption or heat, the resulting stress tends to produce cracks in the deposition film, leading to deterioration in optical characteristics. In the method (4) above, water absorption tends to be high due to the presence of acrylic acid or methacrylic acid, resulting in the

same problems as in the method (3) above.

On the other hand, since plastics containing a neodymium compound tend to show a blue-purple color due to a specific absorption of the neodymium compound, it is difficult to use such plastics for lenses which are subjected to post-coloration.

With a view to eliminate the above prior art problems, it is a primary object to provide a plastic material which is transparent and nearly colorless and is superior in glare-proofing properties.

## Summary of the Invention

In accordance with the present invention, there is provided a plastic material comprising a polymer obtained by polymerizing one or more types of polymerizable monomers and a polymerization initiator or catalyst, and containing a complex compound of the following formula (I) and a dyestuff or a pigment which absorbs light of a color and wavelength which is complementary to the specific color and wavelength of light selectively absorbed by the complex compound:

$(A)_nM$ (I)

wherein M denotes Sc, Y, La, Ce, Pr, Nd, Pm, Sm, Eu, Gd, Tb, Dy, Ho, Er, Tm, Yb or Lu;

n is typically 3, but n may be either 3 or 4 when M is Tb, Ce, or Pr, and n may be either 3 or 2 when M is Eu, Yb, or Sm; and

A is selected from ligands forming chelate complexes having basic structures of formulas (1) to (8) and ligands forming organic metal complexes, or n units of A form a cyclic ligand.

(1)

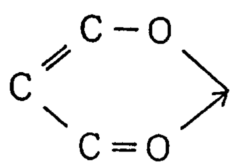

(2)

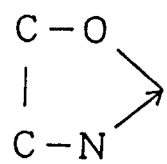

(3)

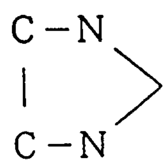

(4)

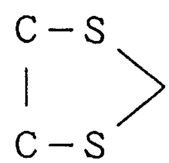

(5)

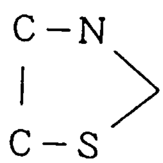

(6)

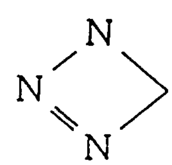

(7)

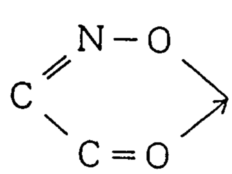

(8)

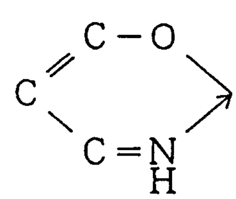

The complex compounds of formula (I) according to the present invention will now be described in detail.

Complex compounds in which A is a ligand having a basic structure of formula (I) include, for example, compounds (1-1) to (1-3) or their derivatives.

(1-1)

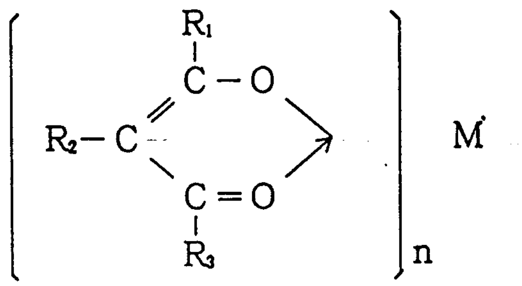

wherein $R_1$, $R_2$, and $R_3$ are alkyl, alicyclic hydrocarbon, aryl, heterocycle, ether, ester, halogen, or hydrogen.

(1-2) Salicylaldehyde chelate complex

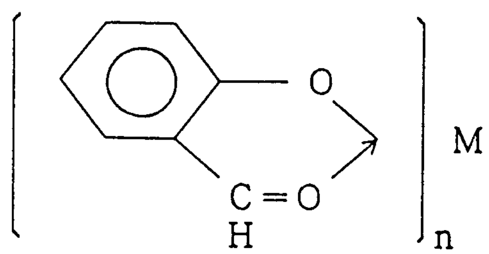

(1-3) 1-Oxyanthraquinone chelate complex

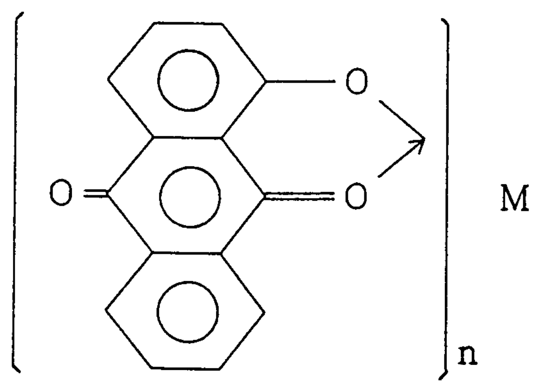

Furthermore, examples of complex compounds of (1-1) include (1-1a) to (1-1j) below:

(1−1a) Benzoylacetone chelate complex

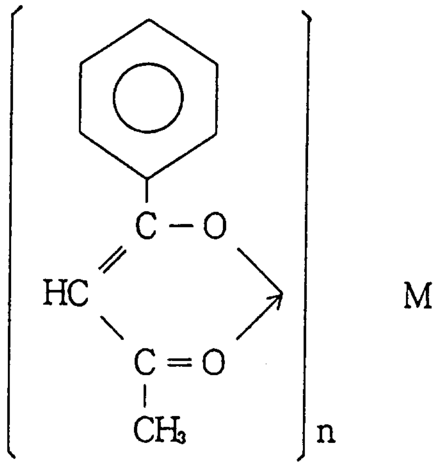

(1−1b) Dibenzoylmethane chelate complex

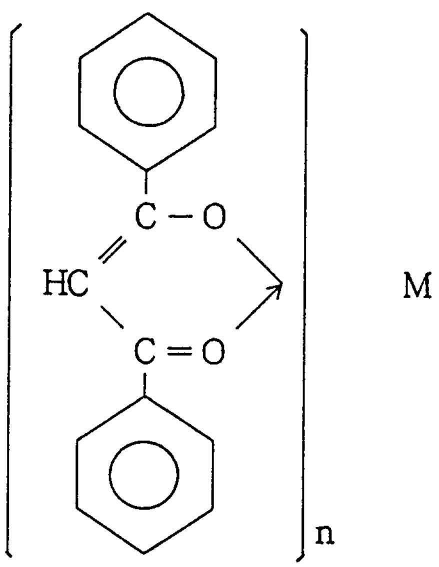

(1−1c) C-methylbenzoylacetone chelate complex

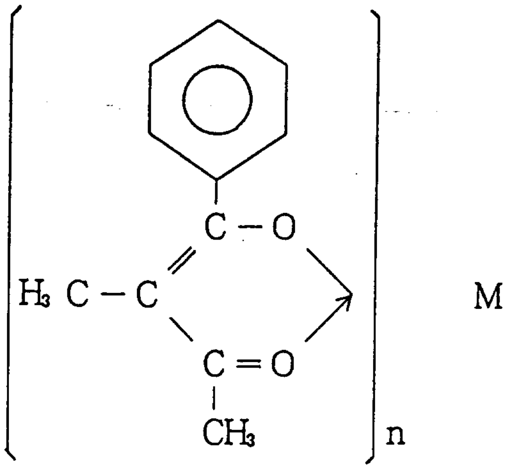

(1−1d) Lanoyltrifluoroacetone chelate complex

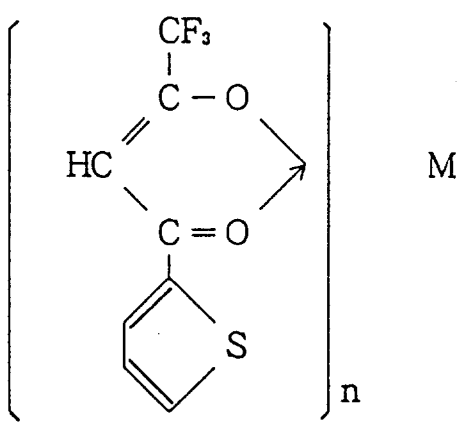

(1−1e) 2-Oxy-1-naphthaldehyde chelate complex

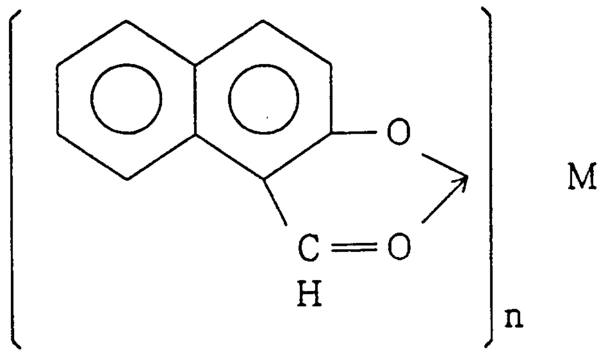

(1−1f) Acetylacetone chelate complex

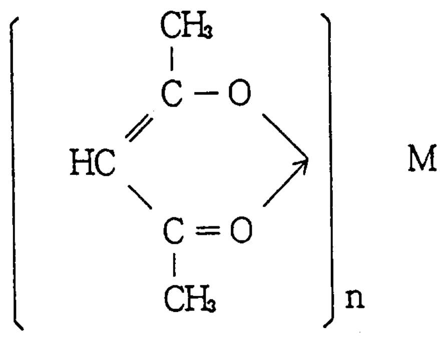

(1−1g) Trifluoroacetylacetone chelate complex

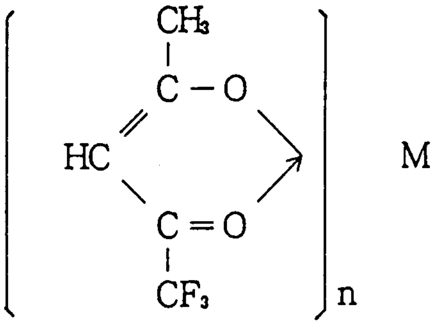

(1−1h) Hexafluoroacetylacetone chelate complex

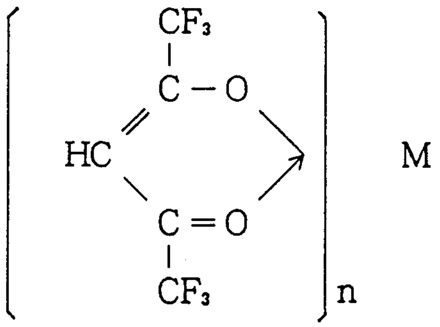

(1−1 i) C-methylacetylacetone chelate complex

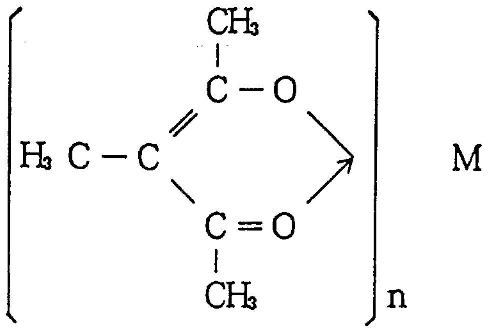

(1−1 j) Chelated silane

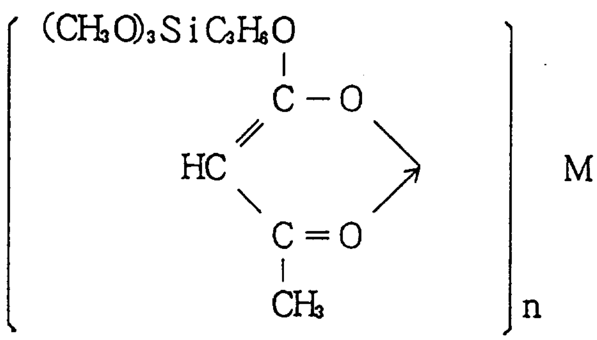

(1−1k) Diethylmalonate chelate complex

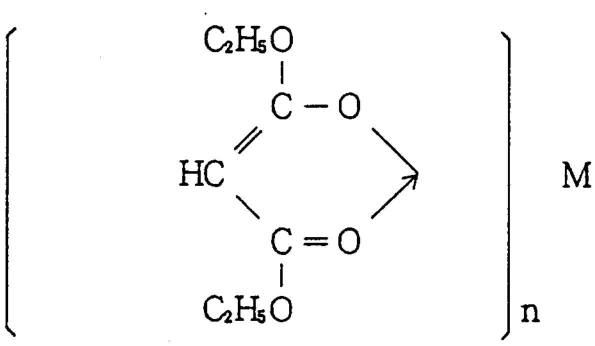

Complex compounds where A is a ligand having the basic structure of formula (2) include, for example, compounds of formula (2-1) to formula (2-3) and their derivatives:

(2−1) 8-Oxyquinoline chelate complex (oxine chelate complex)

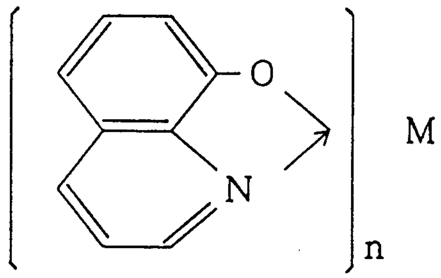

(2−2) Picolinic acid chelate complex

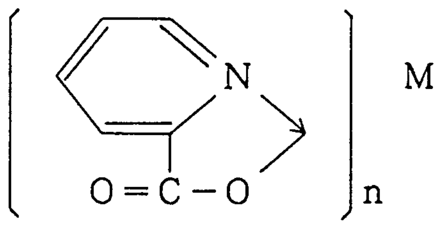

(2−3)

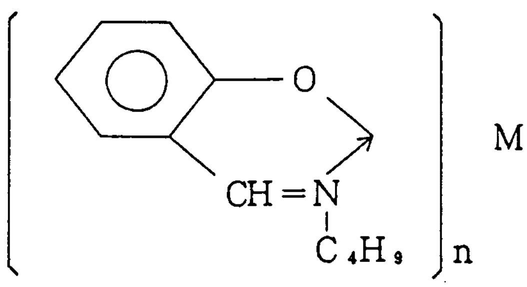

Complex compounds where A is a ligand having the basic structure of formula (3) include, for example, compounds of formula (3-1) to formula (3-3) and their derivatives:

(3−1) Phenanthroline complex

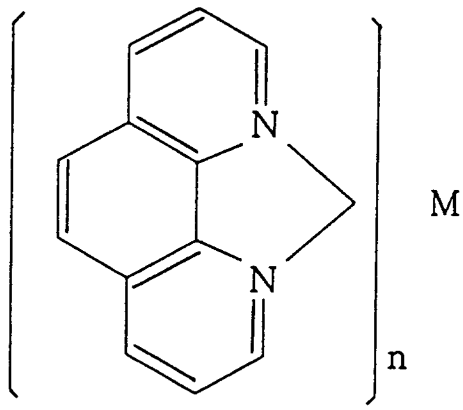

(3−2) Bipyridyl complex

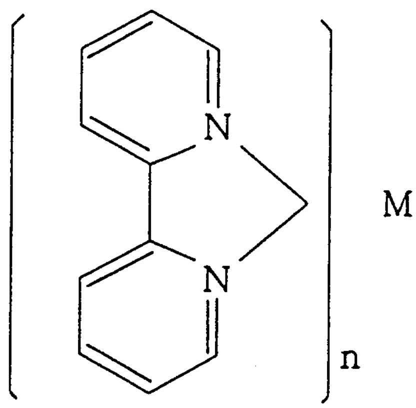

(3−3) Phenylenediamine complex

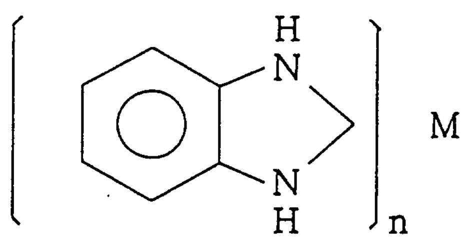

Complex compounds where A is a ligand having the basic structure of formula (4) include, for example, compounds of formula (4-1) and formula (4-2) and their derivatives:

(4−1)

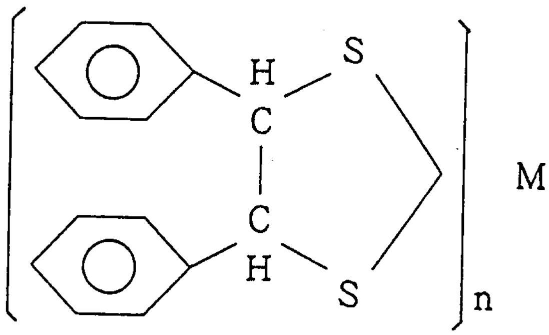

(4−2)

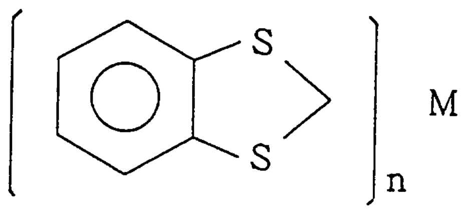

Complex compounds where A is a ligand having the basic structure of formula (5) include, for example, compounds of formula (5-1) and their derivatives:

(5−1)

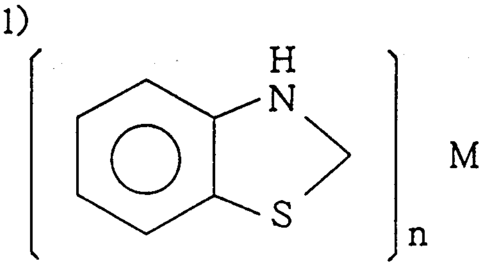

Complex compounds where A is a ligand having the basic structure of formula (6) include, for example, compounds of formula (6-1) and formula (6-2) and their derivatives:

(6−1) Diazoaminobenzene chelate complex

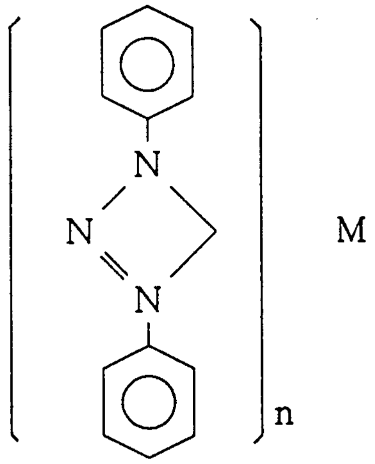

(6−2)

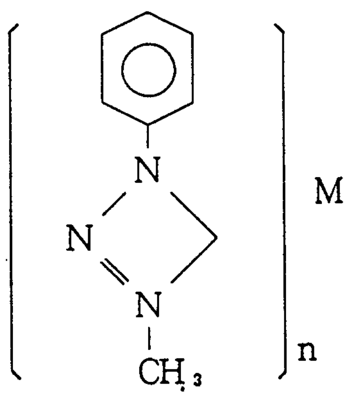

Complex compounds where A is a ligand having the basic structure of formula (7) include, for example, compounds of formula (7-1) and their derivatives:

(7−1) Nitrosonaphthol complex

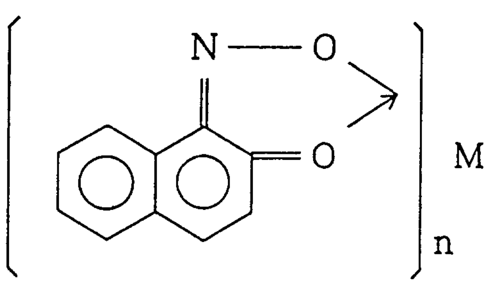

Complex compounds where A is a ligand having the basic structure of formula (8) include, for example, compounds of formula (8-1) and their derivatives:

(8−1) Nitrosonaphthylamine complex

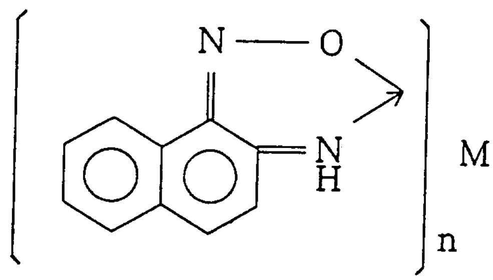

Complex compounds where A is a ligand having the basic structure of formula (9) include, for example, compounds of formula (9) and their derivatives:

(9) Pyridine complex

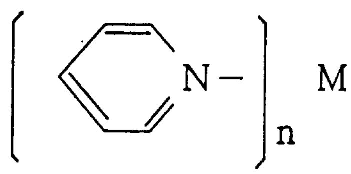

Shown above are examples where n units of ligand A are the same, however, complex compounds with different ligands A can also be used. An example of such a compound (10) is shown below:

(10)

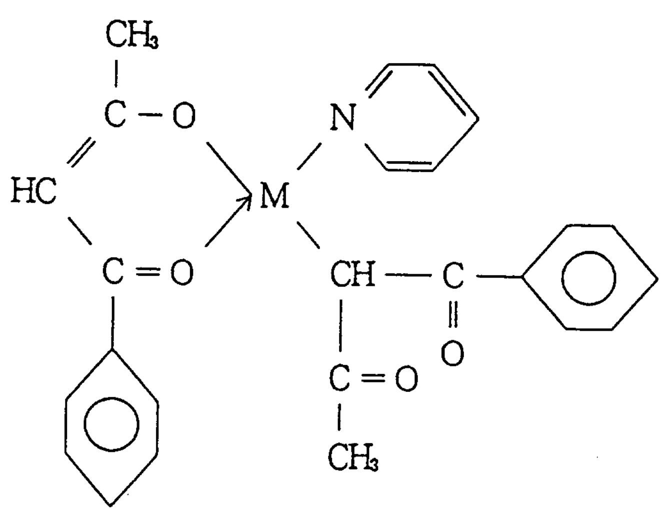

Furthermore, complex compounds where n units of A form a cyclic ligand can also be used. An example of such a compound (11) is shown below:

(11)

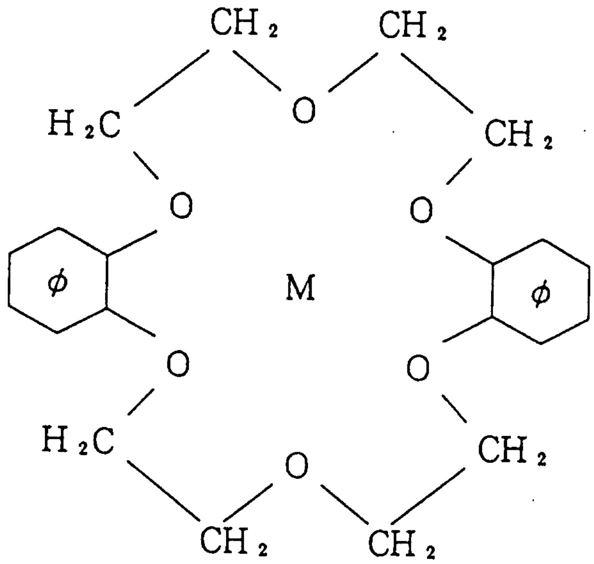

wherein 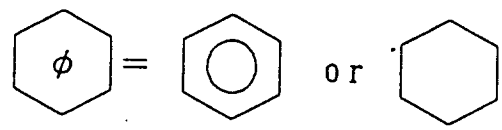 or

A complex compound of formula (I) is essential to provide glare-proofing properties, and is preferably used in an amount of 0.1 to 20% by weight. When less than 0.1% by weight or the complex compound used, glare-proofing effects are inadequate, and when the content exceeds 20% by weight, the resulting plastic material tends to be low in mechanical strength characteristics. Therefore, neither case is preferable.

Furthermore, such complex compounds differ in wavelength of sharp absorption depending on the type of rare earth element M. For example, when M is Nd (neodymium), the absorption is in the vicinity of 570 to 590 nm and provides glare-proofing properties. However, Er (erbium) has an absorption in the vicinity of 510 to 530 nm, and Ho (holmium) has an absorption in the vicinity of 440 to 460 nm, both cases providing glare-proofing effects under low light conditions. Therefore, different types of rare earth elements can be used selectively in the complex compound according to the application. Furthermore, a plurality of complex compounds with different absorption wavelengths can be used to enhance the glare-proofing effects.

The complex compound of formula (I) used in the present invention is hydrophobic, and compared with conventional rare earth compounds, has better compatibility with typical polymerizable monomers which form transparent plastics. Since a polymer containing such a complex compound has no problem of high water absorption, the polymer has no problems of tendency to produce cracks when a deposition film is provided.

Among the complex compounds according to the present invention, those in which the ligand contains an aromatic ring or heterocycle have ultraviolet ray absorption properties in addition to glare-proof properties. Therefore, with the complex compounds, mixing of an ultraviolet absorber is not required for use, for example, in eyeglass lenses and contact lenses.

In general, an ultraviolet absorber is mixed when plastic materials are used in eyeglass lenses and contact lenses. However, the ultraviolet absorber and plastic materials are poorly compatible with each other. Therefore, problems such as elution may arise particularly when glare-proofing substances are used in combination with an ultraviolet absorber. Use of the above complex compounds having ultraviolet absorption can eliminate such problems of elution.

Furthermore, among the complex compounds of formula (I), when a complex compound including a polymerization reactive group in the ligand is used, the complex compound reacts with the polymerizable

monomer and the complex compound is incorporated in the main chain of the polymer. As a result, the complex compound does not undergo elution even after a long period of time. In this case, the resulting polymer has less reduction in mechanical strength compared to a case using a complex compound having no polymerization reactive group. Polymerization reactive groups include unsaturated groups such as vinyl and allyl, isocyanate (-NCO), carboxyl (-COOH), amino ($-NH_2$), hydroxyl (-OH), mercapto (-SH), and methoxy ($-OCH_3$).

Examples of complex compounds having such polymerization reactive groups are shown in (12a) to (12h). In the formulas, X denotes a polymerization reactive group, and R is the same as the above $R_1$ to $R_3$:

(12a)

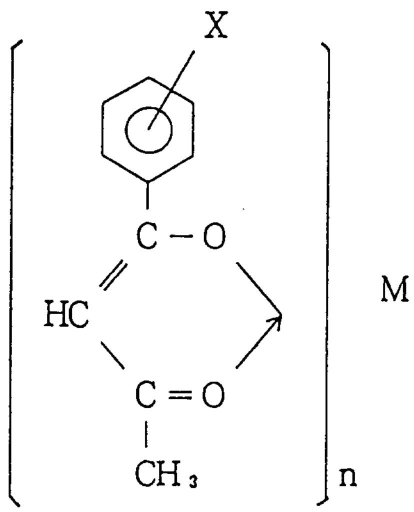

(12b)

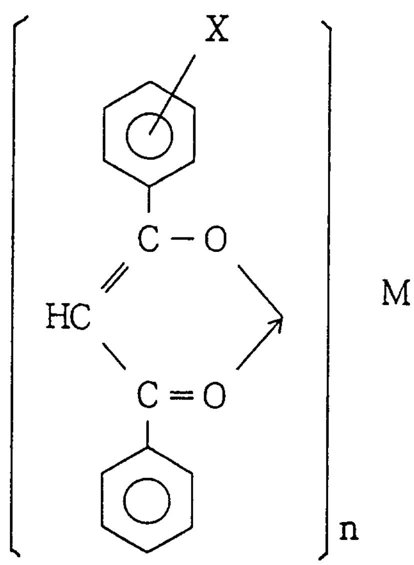

(12c)

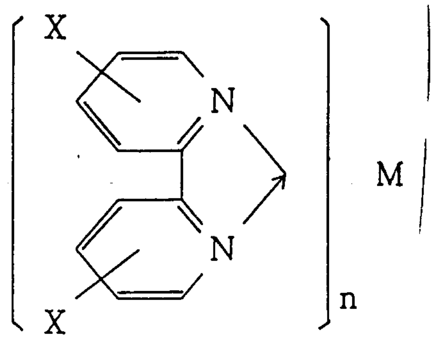

(12d)

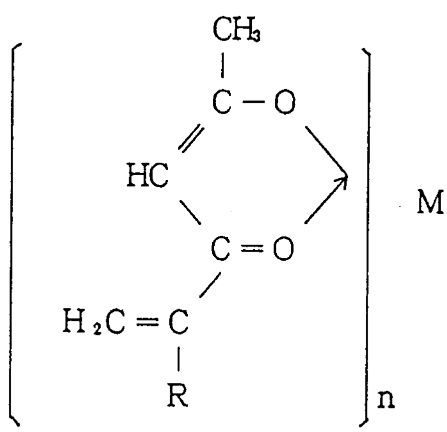

(12e)

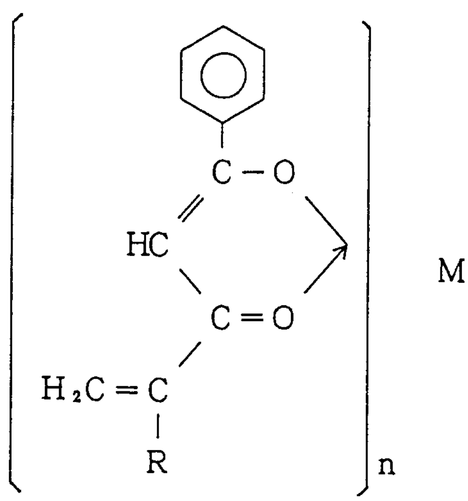

(12f)

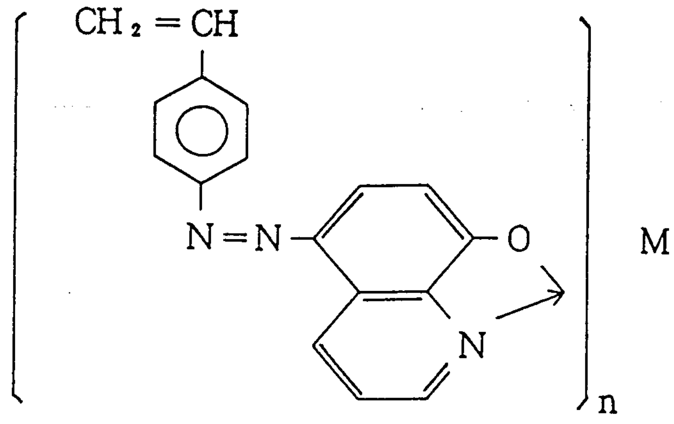

(12g)

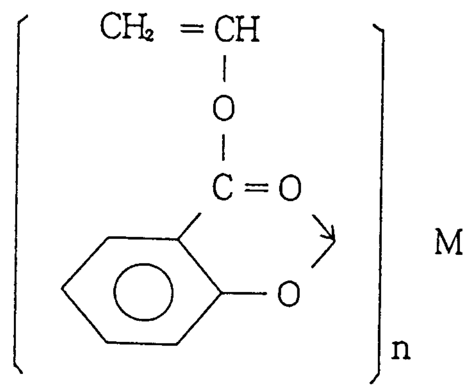

(12h)

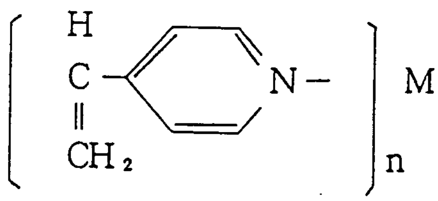

Among the complex compounds of formula (I) described above, typical examples which are readily compatible with polymerizable monomers include compounds of formulas (1-1a) to (1-1c) above. These complex compounds, when M is Nd (neodymium), are purple or blue-purple crystals obtained by mixing an aqueous neutral salt solution of neodymium such as neodymium acetate or chloride with an aqueous ammonia solution of a complex compound of formula (13) below:

(13)

$$R_4-\underset{\underset{O}{\|}}{C}CH_2\underset{\underset{O}{\|}}{C}-R_5$$

Typical examples of complex compounds which are readily compatible with polymerizable monoiners and react with the polymerizable monomers include the compounds of formulas (12a) and (12b). These complex compounds are synthesized by a common method from halogenated benzene having an unsaturated group as a starting material through the Grignard reaction and the Claisen condensation reaction. Tris-vinylbenzoyl-acetonatoneodymium, which is one of the neodymium complex salts of formula (12a), can be synthesized by the method described below.

The starting material chlorostyrene is reacted with metallic magnesium in a solvent such as tetrahydrofuran (THF) to obtain a styryl-Grignard reagent. This reagent is mixed and reacted with acetonitrile by a conventional method well known in the art, and the reaction product is hydrolyzed to obtain vinylphenyl-methylketone. The vinylphenylmethylketone is then condensed with ethyl acetate using sodium ethoxide or the like in ether to synthesize vinylbenzoylacetone.

The synthesis method for the neodymium complex compound will now be described. An aqueous ammonia solution of the above-obtained vinylbenzoylacetone is slowly mixed with an aqueous neodymium acetate solution to obtain a blue-white precipitate. This precipitate is washed and dried to obtain tris-vinylbenzoylacetonato-neodymium.

The polymerizable monomer used in the present invention includes those compounds which can form polymers. The polymer formation reaction includes radical polymerization, ion polymerization, coordination polymerization, ring-opening polymerization, polyaddition, polycondensation, addition condensation and the like.

The polymerizable monomer used in the present invention can be any radical polymerizable compound which is conventionally used, including compounds having one or more unsaturated groups such as vinyl, allyl, acryl, or methacryl in the molecule. Specifically, these compounds include styrene and styrene derivatives such as methylstyrene, dimethylstyrene, chlorostyrene, dichlorostyrene, bromostyrene, p-chloromethylstyrene, and divinylbenzene; monofunctional acrylic esters such as methyl acrylate, ethyl acrylate, n-butyl acrylate, benzyl acrylate, phenyl acrylate, phenoxyethyl acrylate, cyclohexyl acrylate, dicyclopentanyl acrylate, dicyclopentenyl acrylate, dicyclopentenyloxyethyl acrylate, tetrahydrofurfuryl acrylate, isobornyl acrylate, 2-hydroxyethyl acrylate, 2-hydroxypropyl acrylate, 2-acryloyloxyethyl succinic acid, and 2-acryloyloxyethyl phthalic acid; methacrylic acid and monofunctional methacrylic esters such as methyl methacrylate, ethyl methacrylate, n-butyl methacrylate, 2-ethylhexyl methacrylate, isobornyl methacrylate, benzyl methacrylate, phenyl methacrylate, phenoxyethyl methacrylate, cyclohexyl methacrylate, dicyclopentanyl methacrylate, dicyclopentenyl methacrylate, dicyclopentenyloxyethyl methacrylate, isobornyl methacrylate, tetrahydrofurfuryl methacrylate, 2-methacroyloxyethyl succinic acid, 2-hydroxypropyl methacrylate, 2-hydroxybutyl methacrylate, and glycerol methacrylate; allyl compounds such as allylbenzene, allyl-3-cyclohexane propionate, 1-allyl-3,4-dimethoxybenzene, safrole, allylphenylether, allylphenoxy acetate, allylcyclohexane, and allyl (poly)carboxylate; fumaric acid, maleic acid, itaconic acid, and their esters, acrylonitrile, methacrylonitrile, maleic anhydride, and N-substituted maleimide.

Furthermore, in order to enhance the degree of crosslinking, multifunctional monomers such as ethyleneglycol-diacrylate, triethyleneglycol-diacrylate, polyethyleneglycol-diacrylate, tripropyleneglycol-diacrylate, 1,4-butanediol-diacrylate, 1,6-hexanediol-diacrylate, 2,2-bis(4-acroyloxydiphenyl)propane, 2,2-bis(4-acroyloxyethoxydiphenyl)propane, pentaerythritol-triacrylate, ethyleneglycol-dimethacrylate, diethyleneglycol-dimethacrylate, polyethyleneglycol-dimethacrylate, tripropyleneglycol-dimethacrylate, glycerol-dimethacrylate, 1,4-butanediol-dimethacrylate, 1,6-hexanediol-dimethacrylate, 2,2-bis(4-methacroyloxyphenyl)propane, 2,2-bis(4-methacroyloxyethoxyphenyl)propane, glycerin-dimethacrylate, trimethylolpropane-trimethacrylate, divinylbenzene, diallyl-phthalate, diallyl-isophthalate, and diethyleneglycol-bisallyl-carbonate can be used. However, when hydrophilic monomers such as methacrylic acid, acrylic acid, 2-hydroxyethyl-methacrylate, 2-hydroxyethyl-acrylate, 2-hydroxylpropyl-methacrylate, and 2-hydroxypropyl-acrylate are used, it is desirable to use these monomers only in amounts and situations where they will have no effects on the water absorption properties of the resulting polymer.

The amount of the complex compound of formula (I) to be dissolved in these polymerizable monomers is not constant, but must be determined within the range where deterioration in mechanical strength of the resulting plastic material is very small, the transparency is maintained, and glare-proof properties are achieved.

These polymerizable monomers may be used alone or in combinations of two or more types. Furthermore, they may be used in combination with oligomers such as polyester-acrylate, urethane-acrylate, epoxy-acrylate, polyester-methacrylate, urethane-methacrylate, and epoxy-methacrylate.

The polymer of the present invention can be obtained by thermal polymerization or by an electromagnetic wave polymerization method using ultraviolet rays or other radiation.

As a thermal polymerization initiator, an organic peroxide initiator such as diisopropyl-peroxy-carbonate, di-n-propyl-peroxy-dicarbonate, t-hexyl-peroxy-neodecanoate, lauroyl-peroxide, cumene-hydroperoxide, benzoyl-peroxide, t-butyl-peroxy-pivalate, t-butyl-peroxy-diisobutyrate, or t-butyl-peroxy-isopropyl-carbonate, or an azo compound initiator such as azo-bis-isobutyronitrile, azo-bis(2,4-dimethyl-valeronitrile), or a redox type initiator can be used, preferably in an amount of 0.01 to 5% by weight. As a photopolymerization initiator, 4-phenoxy-dichloro-acetophenone, diethoxy-acetophenone, 2-hydroxy-2-methyl-1-phenylpropane-1-one, 1-(4-isopropylphenyl)-2-hydroxy-2-methylpropane-1-one, 1-hydroxy-dicyclohexylphenylketone, benzoin, benzoin-methylether, benzoin-ethylether, benzoin-isopropylether, benzoin-isobutylether, benzyl-dimethylketal, benzophenone, hydroxybenzophenone, 2,4,6-trimethylbenzoyl-diphenylphosphine-oxide, methylphenyl-glyoxylate, or benzil can be used, preferably in an amount of 0.01 to 5% by weight.

The mixture comprising a complex compound of formula (I), the above-described polymerizable monomer, and a polymerization initiator can be mixed, as needed, with small amounts of a thermal stabilizer, an antioxidant, an ultraviolet absorber, and/or a releasing agent.

In the present invention, of the polymerizable monomers, one which has good compatibility with the complex compound of formula (I) and provides a transparent plastic material which is high in transparency and relatively high in refractive index (1.58 to 1.61) according to various applications includes a mixture of: (a) at least one monomer of formula (14), (b) at least one monomer of formula (15), and as needed, (c) at least one radical polymerizable monomer.

(14)

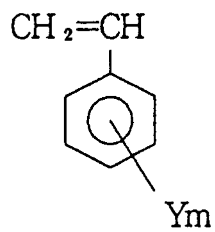

wherein Y denotes hydrogen or a halogen other than fluorine, and m is 1 or 2.

(15)

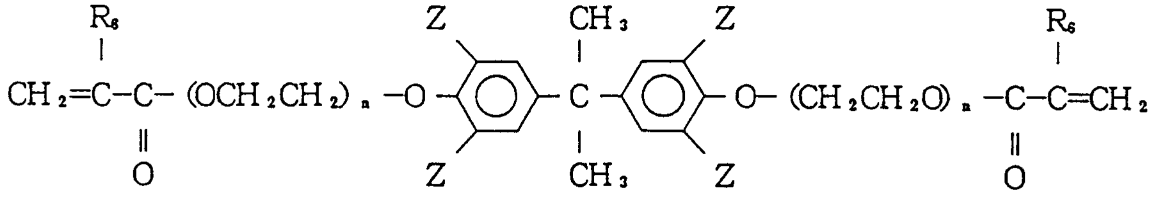

wherein Z denotes a halogen other than fluorine, $R_6$ is hydrogen or methyl, and n is 0 to 3.

When 9 to 80 parts by weight of (a), 20 to 80 parts by weight of (b), and 0 to 20 parts by weight of (c) are mixed, a highly transparent plastic material with a refractive index of 1.58 to 1.61 can be obtained.

As the polymerizable monomer in the present invention, a polyaddition reactive compound can be used. Typical polyaddition reactions involve an isocyanate group (-NCO) or an isothiocyanate group (-NCS). Compounds which are reactive with an isocyanate group and an isothiocyanate group include compounds having a hydroxyl group, an amino group, a mercapto group, a carboxyl group, and the like.

Thus, the polymerizable monomer which can form a polymer comprises a compound having at least two isocyanate groups in the molecule as shown in formula (16a), and a compound having at least two hydroxyl, amino, mercapto, or carboxyl groups in the molecule as shown in formulas (17a) to (17d), or comprises a compound having at least two isothiocyanate groups in the molecule as shown in formula (16b), and a compound having at least two hydroxyl, amino, mercapto, or carboxyl groups in the molecule as shown in formulas (17a) to (17d). In the formulas, m and m' indicate integers of 2 or greater.

(16a) $R-(NCO)_m$

(16b) $R-(NCS)_m$

(17a) $R'-(OH)_{m'}$

(17b) $R'-(NH_2)_{m'}$

(17c) $R'-(SH)_{m'}$

(17d) $R'-(COOH)_{m'}$

Examples of typical isocyanate reactions are shown below:

(18a) 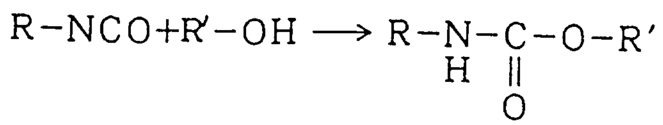

(18b) 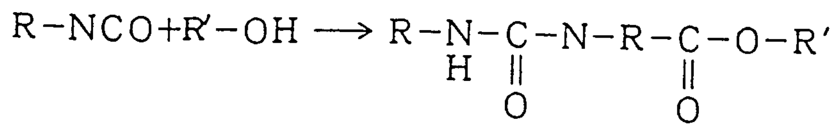

(18c) 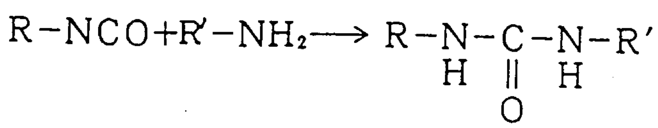

(18d) 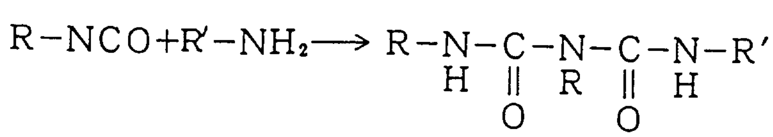

(18e) 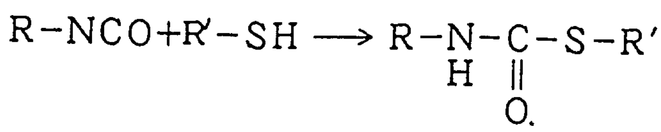

(18f) 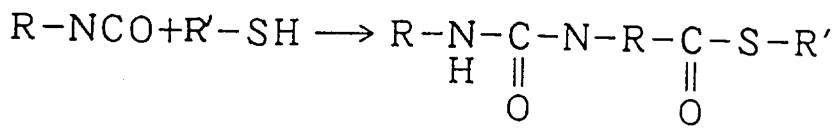

(18g) 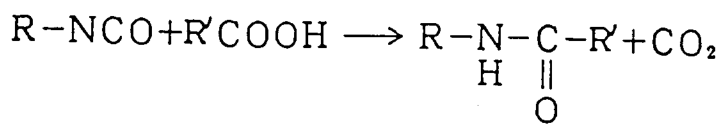

(18h) 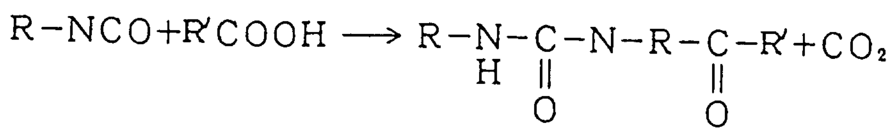

Examples of typical isothiocyanate reactions are shown below:

(19a) 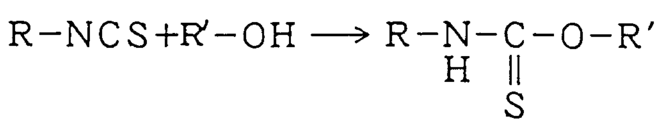

(19b) 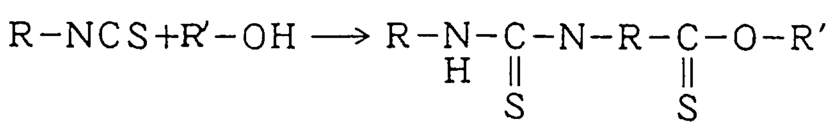

(19c) 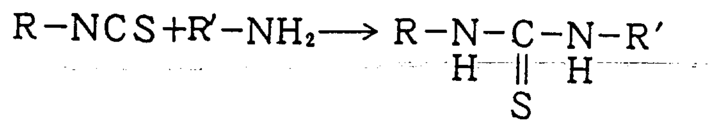

(19d) 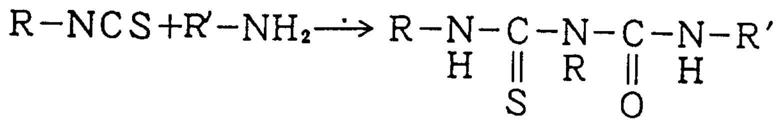

(19e) 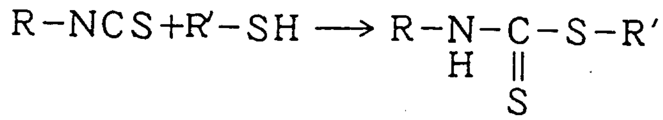

(19f) 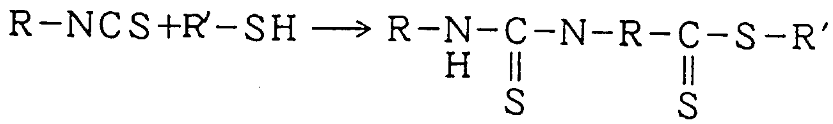

(19g) 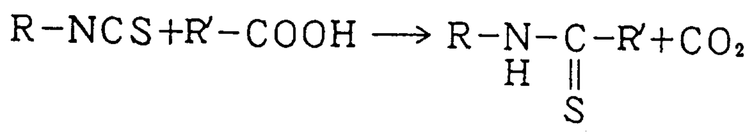

(19h) 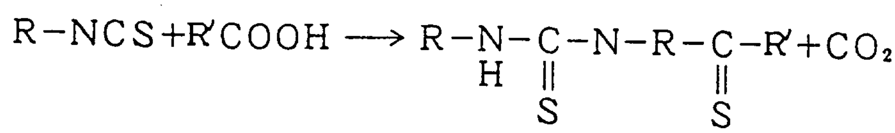

Specifically, compounds of formulas (17a) and (17b) include aliphatic polyisocyanates such as hexamethylene-diisocyanate, 2,4,4-trimethylhexamethylene-diisocyanate, 1,3,6-hexamethylene-triisocyanate, lysine-diisocyanate methylester, lysine-triisocyanate, xylylene-diisocyanate, and bis-(isocyanatemethyl)-naphthalene; alicyclic polyisocyanates such as isophorone-diisocyanate, dicyclohexylmethane-diisocyanate, cyclohexane-diisocyanate, dicyclohexyl-dimethylmethane-diisocyanate, and 2,2'-dimethyl-dicyclohexylmethane-diisocyanate; aromatic polyisocyanates such as phenylene-diisocyanate, tolylene-diisocyanate, naphthalene-diisocyanate, 4,4'-diphenylmethane-diisocyanate, 3,3'-dimethyldiphenylmethane-4,4'-diisocyanate, naphthalene-triisocyanate, and diphenylmethane-2,4,4'-triisocyanate; sulfur-containing aliphatic isocyanates such as thiodiethyl-diisocyanate, thiodipropyl-diisocyanate, thiodipropyl-diisocyanate, thiodihexyl-diisocyanate, and dimethylsulfone-diisocyanate; aromatic sulfide isocyanates such as diphenylsulfide-2,4'-diisocyanate, diphenylsulfide-4,4'-diisocyanate, and 3,3'-dimethoxy-4,4'diisocyanate-dibenzylthioether; aromatic disulfide isocyanates such as diphenyldisulfide-4,4'-diisocyanate, and 2,2'-dimethyldiphenyldisulfide-5,5'-diisocyanate; aromatic sulfone isocyanates such as diphenylsulfone-4,4'-diisocyanate, benzidinesulfone-4,4'-diisocyanate, and diphenylmethanesulfone-4,4'-diisocyanate; sulfonic acid ester isocyanates; and aromatic sulfonamides. Furthermore, their halogen substitutes such as chlorine substitutes and bromine substitutes, alkyl substitutes, alkoxy substitutes, nitro substitutes, prepolymer type modifications with polyhydric alcohols, carbodiimide modifications, urea modifications, biuret modifications, dimerization or trimerization reaction products can also be used. Polyisothiocyanate compounds have at least two -NCS groups in the molecule, and may contain sulfur atom in addition to the isothiocyanate group. Specifically, the compounds include aromatic isothiocyanates such as 1,2-diisothiocyanateethane, and 1,3-diisothiocyanatepropane; alicyclic isothiocyanates such as cyclohexane-diisothiocyanate; aromatic isothiocyanates such as 1,2-diisothiocyanate-benzene, and 1,1'-methylenebis(4-isothiocyanate-3-methylbenzene; heterocyclic isothiocyanates such as 2,4,6-triisothiocyanate-1,3,5-triazine; and carboxyl isothiocyanates such as 1,3-benzenedicarbonyl-diisothiocyanate.

Compounds of formulas (18a) to (18d) include polyetherpolyols, polytetramethyleneetherglycol, alkyleneoxide copolymerized polyols, epoxy resin-modified polyols, condensation type polyesterpolyols, lactone type polyesterpolyols, polycarbonatediol, acrylic polyols, polybutadiene polyols, phosphorus-containing polyols, halogen-containing polyols, polyetherpolyamines, polytetramethyleneether-diamine, alkyleneoxide copolymerized polyamines, epoxy resin-modified polyamines, condensation type polyester-polyamines, lactone type polyester-polyamines, polycarbonate-diamines, acrylic polyamines, polybutadiene-polyamines, phosphorus-containing polyamines, halogen-containing polyamines, polyether-polythiols, polytetramethyleneether-dithiol, alkyleneoxide-copolymerized polythiols, epoxy resin-modified polythiols, condensation type polyester-polythiols, lactone type polyesterpolythiolpolycarbonate-dithiols,acrylic polythiols, polybutadiene-polythiols, phosphorus-containing polythiols, and halogen-containing polythiols. In this case, it is preferable to determine the basic structure in order to obtain the properties of the resulting polymer according to the application.

Furthermore, multifunctional compounds such as low-molecular-weight amines or diols having at least two functions can be used to enhance the degree of crosslinking. The multifunctional compounds include ethyleneglycol, hydroquinone-diethylolether, 1,4-butyleneglycol, trimethylolpropane, sorbitol, and aliphatic and alicyclic di- and polyamines such as diphenylmethane-diamine, m-phenylnenediamine, and 3,3'-dichloro-4,4'-diaminodiphenyl-methane.

The polymer used in the present invention is typically produced by mixing a polymerizable monomer of formulas (17a) and (17b) with a polymerizable monomer of formulas (18a) to (18d), and heating to achieve a polyaddition reaction. The polymerization catalysts include amine catalysts including monoamines such as triethylamine, and N,N-dimethylcyclohexylamine; N,N,N',N'-tetramethylethylenediamine, N,N,N',N'-tetramethylpropane-1,3-diamine; triamines such as N,N,N',N'-pentamethyldiethylenetriamine, N,N,N',N'-pentamethyldipropylenetriamine, and tetramethylguanidine; cyclic amines such as triethylenediamine, N,N'-dimethylpiperazine, N-methyl-N'-(2-dimethylamino)ethylpiperazine, N-methylmorpholine, N-(N',N'-dimethylaminoethyl)morpholine, and 1,2-dimethylimidazole; alcohol amines such as dimethylamino-ethanol, dimethylamino-ethoxyethanol, N,N,N'-trimethylaminoethyl-ethanolamine, N-methyl-N'(2-hydroxyethyl)-piperazine, and N-(2-hydroxyethyl)morpholine; and ether amines such as bis-(2-dimethylaminoethyl)ether, ethyleneglycol-bis(3-dimethyl)-aminopropylether; and organic metal catalysts such as dibutyl-dilaurate, dibutyltin-diacetate, stannous octoate, dibutyltin-mercaptide, dibutyltin-thiocarboxylate, dibutyltin-dimaleate, dioctyltin-mercaptide, dioctyltin-thiocarboxylate, phenylmercury propionate, and lead octenante. These polymerization catalysts can be used alone or in combinations of two or more types.

The amount of the complex compound of formula (I) dissolved in these polymerizable monomers is not constant, but must be determined within the range where the transparency is maintained, and glare-proof properties are achieved.

Furthermore, the mixture comprising a complex compound of formula (I), the above-described polyaddition polymerizable monomer, and a polymerization catalyst can be mixed, as needed, with a photostabilizer, an ultraviolet absorber, an antioxidant, and/or an internal releasing agent.

Of the above-described polyaddition polymerizable monomers, one which has good compatibility with the complex compound of formula (I), is high in transparency, and can provide a transparent plastic having a relatively high refractive index (1.60 to 1.75) is disclosed in Japanese Patent Publication Laid-open 2-270859/1990, which includes a mercapto compound of formula (20), and at least one ester compound selected from polyisothiocyanate compounds, polyisothiocyanate compounds, and isothiocyanate compounds having an isocyanate group. This monomer can be reacted in the presence of a polymerization catalyst to obtain a sulfur-containing urethane resin type plastic material having a refractive index of 1.60 to 1.75.

(20)

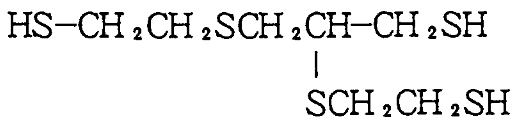

Furthermore, the transparent plastic material according to the present invention can be obtained by kneading a complex compound of the present invention with a polymer obtained by polymerization of at least one polymerizable monomer, a polymerization initiator or a polymerization catalyst in a molten state to achieve uniform dissolution. This may be achieved, for example, by a method in which the polymer and a complex compound according to the present invention are previously mixed, and then kneaded through an extruder for uniform dissolution. The plastic material obtained by this method can be molded into moldings by a molding method such as injection molding, extrusion molding, calender molding, blow molding, compression molding, transfer molding or the like.

Examples of the polymer used in the present invention include thermoplastic resins such as polystyrene and its copolymers, polymethylmethacrylate, poly-(4-methylpentene-1), polyamide, polyacetal, polycarbonate, polyester, polyphenylene-oxide, Noryl resin, and polysulfone.

The dyestuff or pigment used in the present invention is not specifically restricted, but may be selected from those which can be mixed with the polymerizable monomer used. However, the dyestuff or pigment is required to absorb light of a color and wavelength which is complementary to the specific color and wavelength of light selectively absorbed by the complex compound of formula (I). For example, when the complex compound is an Nd complex which selectively absorbs yellow light in the vicinity of 570 to 590 nm, a dyestuff or pigment which at least absorbs blue light (which is complementary to yellow light) in the vicinity of 435 to 477 nm, that is, a yellowish dyestuff or pigment, is used. This reduces the yellow color of the polymer due to the complex compound to obtain a nearly colorless plastic material.

Examples of some dyestuffs or pigments which can be used in the present invention will now be shown. Table 1 shows yellow dyestuffs and pigments (having peak absorptions at 380-498 nm) which are used for color compensation for neodymium complex compounds. Table 2 shows green dyestuffs and pigments (having peak absorptions at 618-750 nm) which are used for color compensation for erbium complex compounds. Table 3 shows blue dyestuffs and pigments (having peak absorptions at 570-720 nm) which are used for color compensation for holmium complex compounds. Solubility in Tables 1 to 3 refers to the solubility of the complex compound in polymerizable monomers; ○ represents a good solubility, and X represents a poor solubility. It is preferable to use a dyestuff or pigment which is soluble in the polymerizable monomer. However, one which at least gives a transparent polymer by polymerization, consists of fine particles, and has a good dispersibility in the polymerizable monomer may be used.

Table 1

| Name | Chemical name | Solu-bility | Peak absorption wavelength (nm) |
|---|---|---|---|
| Tartrazin | Sodium salt of 3-carboxy-5-hydroxy-p-sulfophenyl-4-p-sulfophenyl-azopyrazole | × | 427 ± 2 |
| Sunset Yellow FCF | Disodium salt of 1-p-sulfophenylazo-2-naphthol-6-sulfonic acid | × | 482 ± 2 |
| Fluorescein | 3,6-fluorane-diol | × | 490 ± 2 |
| Uranine | Disodium salt of 9-σ-carboxyphenyl-6-hydroxy-3-isoxanthone | × | 489 ± 2 |
| Uranine K | Dipotassium salt of 9-σ-carboxyphenyl-6-hydroxy-3-isoxanthone | × | 416 ± 2 |
| Quinoline Yellow WS | Disodium salt of 2-(2-quinolyl)-1,3-indandione-disulfonic acid | × | 413 ± 2 |
| Quinoline Yellow SS | 2-(2-quinolyl)-1,3-indandione | ○ | 424 ± 2 |
| Benzidine Yellow G | 3,3'-dichloro-diphenyl-4,4'-bisazo-(acetoaceto-anilide) | ○ | 424 ± 2 |
| Hanza Yellow | α-(α-nitro-p-triazo)-acetoacetoanilide | ○ | 412 ± 2 |
| Polar Yellow 5G | Sodium salt of 1-(4-chloro-2-sulfophenyl)-3-methyl-4-[p-(p-trisulfonoquine)-phenyldiazo]-5-pyrazolone | × | 405 ± 2 |
| Naphthol Yellow S | Disodium salt of 2,4-dinitro-1-naphthol-7-sulfonic acid | × | 428 ± 2 |
| Yellow AB | 1-phenylazo-2-naphthyl-amine | ○ | 436 ± 2 |
| Yellow OB | 1-α-tolylazo-2-naphthylamine | ○ | 438 ± 2 |

| | | | |
|---|---|---|---|
| Metanil Yellow | Monosodium salt of 4-m-sulfophenylazo-diphenylamine | ○ | 436 ± 2 |
| Fast Light Yellow 3G | Monosodium salt of 5-hydroxy-3-methyl-4-phenylazo-1-p-sulfo-phenylpyrazole | × | 393 ± 2 |

Table 2

| Name | Chemical name | Solu-bility | Peak absorption wavelength (nm) |
|---|---|---|---|
| Fast Green FCF | Disodium salt of 4-{[4-(N-ethyl-m-sulfobenzyl-amino)-phenyl]-(4-hydroxy-2-sulfoniumphenyl)-methylene}-[1-(N-ethyl-N-m-sulfobenzyl)-$\Delta^{2,5}$-cyclohexadieneimine | × | 624 ± 2 |
| Alizarine Cyanine Green F | Disodium salt of 1,4-bis (o-sulfo-p-toluyno)-anthraquinone | × | 642 ± 2 |
| Quinizarine Green SS | 1,4-bis-(p-toluyl)-anthraquinone | ○ | 647 ± 2 |
| Light Green SF Yellowish | Disodium salt of 4-{[4-(N-ethyl-m-sulfobenzyl-amino)-phenyl]-(4-sulfoniumphenyl)-methylene}-[1-(N-ethyl-N-m-sulfo-benzyl)-$\Delta^{2,5}$-cyclohexadieneimine | × | 631 ± 2 |
| Naphthol Green B | Fe salt of 6-sodiumsulfo-1-isonitroso-1,2-naphthoquinone | × | 711 ± 2 |
| Guinea Green B | Monosodium salt of 4-[4-(N-ethyl-m-sulfobenzyl-amino)-diphenylmethylene]-[1-(N-ethyl-N-m-sulfoniumbenzyl)-$\Delta^{2,5}$-cyclohexadieneimine | × | 619 ± 2 |

Table 3

| Name | Chemical name | Solubility | Peak absorption wavelength (nm) |
|---|---|---|---|
| Brilliant Blue FCF | Disodium salt of 4-{[4-N-ethyl-m-sulfobenzylamino)-phenyl]-(2-sulfonium-phenyl)-methylene)-[1-(N-ethyl-N-m-sulfobenzyl)-$\Delta^{2,5}$-cyclohexadieneimine] | × | 630 ± 2 |
| Indigo Carmine | Disodium salt of 5,5'-indigotin-disulfonic acid | × | 610 ± 2 |
| Indigo | Indigotin | × | 603 ± 2 |
| Patent Blue NA | Monosodium salt of 4-{[4-(N-ethyl-benzylamino)-phenyl]-(5-hydroxy-4-sulfo-2-sulfophenyl}-(N-ethyl-N-benzyl-$\Delta^{2,5}$-cyclohexadieneimine) | × | 635 ± 2 |
| Patent Blue CA | Calcium salt of 4-{[4-(N-ethyl-benzylamino)-phenyl]-(5-hydroxy-4-sulfophenyl)-methylene}-(N-ethyl-N-benzyl-$\Delta^{2,5}$-cyclohexadieneimine) | × | 635 ± 2 |
| Carbanthrene Blue | 3,3'-cycloindanthrene | × | 714 ± 2 |
| Alphazurine FG | Diammonium salt of 4-{[4-(N-ethyl-m-sulfo-benzylamino)-phenyl]-2-sulfoniumphenyl)-methylene}-[1-(N-ethyl-N-m-sulfo-benzyl)-$\Delta^{2,5}$-cyclo-hexadieneimine] | × | 629 ± 2 |
| Alizurine Purple SS | 1-hydroxy-4-p-toluyno-anthraquinone | ○ | 580 ± 2 |
| Sudan Blue B | 1-methylamino-4-m-tolyl-aminoanthraquinone | ○ | 640 ± 2 |
| Alizurine Purple | Monosodium salt of 1-hydroxy-4-(o-sulfo-p-toluyno-anthraquinone) | × | 575 ± 2 |

In addition to those listed in Table 1, yellow dyestuffs and pigments include yellow inorganic pigments such as Titanium Yellow ($TiO_2$ • BaO • NiO, $TiO_2$ • NiO • $Sb_2O_3$), iron oxides (yellow iron oxide: $Fe_2O_3$ • $H_2O$), Chrome Yellow ($PbCrO_4$), and Cadmium Yellow (CdS); and yellow organic pigments such as Fest Yellow G, JIS Azo Yellow AAA, JIS Azo Yellow HR, Flavanthrone Yellow, Isoindolinone Yellow 2GLT, Isoindolinone Yellow 3RLT, Quinophthalone Yellow, Isoindoline Yellow, and Nickel Nitroso Yellow.

In addition to those listed in Table 2, green dyestuffs and pigments include green inorganic pigments such as chromium oxide ($Cr_2O_3$), Titanium Yellow ($TiO_2$ • CoO • NiO • ZnO, CoO • $Al_2O_3$ • $Cr_2O_3$), Cobalt Green (CoO • nZnO), Viridian ($Cr_2O_3$ • $2H_2O$), and Emerald Green [$Cu(C_2H_3O_2)$ • $3Cu(AsO_2)_2$]; and green organic pigments such as Nickel Azo Yellow, Copper Phthalocyanine Green, and brominated Copper Phthalocyanine Green.

Furthermore, in addition those listed in Table 3, blue dyestuffs and pigments include blue inorganic pigments such as Cobalt Blue ($CoO \cdot nAl_2O_3$), Serlian Blue ($CoO \cdot nSnO \cdot mMgO$), Ultramarine Blue ($Na_6Al_6(SiO_4)_6 \cdot 2Na_3SO_4$), and Prussian Blue ($KFe[Fe(CN)_6]$);and blue organic pigments such as Copper Phthalocyanine Blue and Indanthrone Blue.

The transparent plastic material according to the present invention is used to good advantage in optical lenses and filters such as eyeglass lenses, contact lenses, intraocular lenses, sunglasses, display filter covers, illumination device covers, automobile mirrors, and cameras, and hard coatings for eyeglass lenses and optical device lenses.

Since contact lenses are a medical material which directly contacts the cornea, it is preferable to use a complex compound which has a particularly good solubility such as trisbenzoyl-acetonatoneodymium or one which copolymerizes with the polymerizable monomer. As a polymerizable monomer, it is particularly preferable to use acrylic ester or methacrylic ester.

For contact lenses, it is appropriate that the polymerizable monomer be injected in a glass tube, a polypropylene or polytetrafluoroethylene tube, or in a gap between sheets, and heated to undergo thermal polymerization, or irradiated with ultraviolet rays to undergo photopolymerization. When a stress occurs in the polymer due to polymerization shrinkage or polymerization heat, it is desirable to anneal the polymer to remove the stress.

When the transparent plastic material is used in farsighted eyeglasses, it has an effect to prevent asthenopia.

The human eye control ability tends to deteriorate with increasing age, so that it becomes difficult to focus on close objects and the eyes feel fatigued. In general, this phenomenon, which is called hyperopia, is due to the fact that the elasticity of the eye lens is lost and the control ability deteriorates with increasing age. Farsighted eyeglass lenses are used to eliminate this inconvenience. In the past, single focus lenses have been used for farsighted eyeglasses. However, recently, to eliminate tedious replacement, double focus or multi-focus lenses are generally used. Use of these farsighted eyeglass lenses helps the eye control ability and reduces fatigue of the eyes, considerably improving the sight environment. However, there is a type of fatigue of eyes which cannot be eliminated by the use of conventional farsighted eyeglass lenses which are mainly to help the eye control ability. In the eyes, light scattering and absorption by the cornea, eye lenses, and vitreous body tend to increase with increasing ago. As a result, the eyes tend to perceive a reduction in brightness of sight and the formation of a light veil. Aged persons tend to suffer from myodesopsia in light places, that is, formation of a light veil due to the glare from the light source and reflected light. This is caused by aging of the intraocular tissues, since absorption of short-wavelength light increases due to yellowing of the eye lenses and hardening of the eye lenses increases light scattering and the illuminance at the retina surface, resulting in a reduction in contrast vision. Such a reduction is felt by the individual as eye fatigue or glare. It is very difficult to fundamentally remove these causes of fatigue. In the past, these problems have been improved by sufficient rest, improvement of illumination or the like.

On the other hand, farsighted eyeglass lenses using the transparent plastic material according to the present invention can be worn at all times in the daily life, and can prevent asthenopia.

## Brief Description of the Drawings

Fig.1 is a spectral characteristic curve of the lens in Example 6.
Fig.2 is a spectral characteristic curve of the lens in Example 14.
Fig.3 is a spectral characteristic curve of the lens in Example 18.

## Description of the Preferred Embodiments

The present invention will now be described with reference to Examples.

[Production Examples of complex compounds]

(Production Example 1) Production of tris-acetylacetonato-neodymium

6.0 g of acetylacetone was dissolved in 4% ammonia aqueous solution, and the acetylacetone - ammonia aqueous solution was added to a neodymium acetate aqueous solution obtained by dissolving 6.8 g of neodymium acetate hydrate in 50 ml of water to obtain purple crystalline tris-acetylacetonato-neodymium. The thus obtained tris-acetylacetonato-neodymium was soluble in styrene, divinylbenzene, phenyl-methacrylate, tetrahydrofurfuryl-methacrylate, and diethyleneglycol-bisallyl-carbonate.

(Production Example 2) Production of tris-benzoylacetonato-neodymium

2.43 g of benzoylacetone was dissolved in 10% ammonia aqueous solution, and the benzoylacetone - ammonia aqueous solution was added to a neodymium acetate aqueous solution obtained by dissolving 1.70 g of neodymium acetate hydrate in 50 ml of water to obtain purple crystalline tris-benzoylacetonato-neodymium. The thus obtained tris-benzoylacetonato-neodymium was soluble in styrene, divinylbenzene, methyl-methacrylate, benzyl-methacrylate, phenyl-methacrylate, diallyl-phthalate, and diethyleneglycol-bisallyl-carbonate.

(Production Example 3) Production of tris-phenanthylphenylketonato-neodymium

3.36 g of phenanthylphenylketone was dissolved in 5% ammonia aqueous solution, and the phenanthylphenylketone - ammonia aqueous solution was added to a neodymium acetate aqueous solution obtained by dissolving 1.70 g of neodymium acetate in 50 ml of water to obtain blue-green crystalline tris-phenanthylphenylketonato-neodymium. The thus obtained tris-phenanthylphenylketonato-neodymium was soluble in styrene, divinylbenzene, methyl-methacrylate, benzyl-methacrylate, phenyl-methacrylate, diallyl-phthalate, and diethyleneglycol-bisallyl-carbonate.

(Production Example 4) Production of tris-acetylacetonato-erbium

6.0 g of acetylacetone was dissolved in 4% ammonia aqueous solution, and the acetylacetone - ammonia aqueous solution was added to an erbium acetate aqueous solution obtained by dissolving 9.20 g of erbium acetate tetrahydrate in 50 ml of water to obtain rose crystalline tris-acetylacetonato-erbium. The thus obtained tris-acetylacetonato-erbium was soluble in styrene, divinylbenzene, phenyl-methacrylate, tetrahydrofurfuryl-methacrylate, and diethyleneglycol-bisallyl-carbonate.

(Production Example 5) Production of tris-benzoylacetonato-erbium

2.43 g of benzoylacetone was dissolved in 5% ammonia aqueous solution, and the benzoylacetone - ammonia aqueous solution was added to an erbium acetate aqueous solution obtained by dissolving 2.30 g of erbium acetate tetrahydrate in 50 ml of water to obtain rose crystalline tris-benzoylacetonato-erbium. The thus obtained tris-benzoylacetonato-erbium was soluble in styrene, divinylbenzene, methyl-methacrylate, benzyl-methacrylate, phenyl-methacrylate, diallyl-phthalate, and diethyleneglycol-bisallyl-carbonate.

(Production Example 6) Production of tris-phenanthylketonato-erbium

3.36 g of phenanthylphenylketone was dissolved in 5% ammonia aqueous solution, and the phenanthylphenylketone - ammonia aqueous solution was added to an erbium acetate aqueous solution obtained by dissolving 2.30 g of erbium acetate tetrahydrate in 50 ml of water to obtain rose crystalline tris-phenanthylphenylketonato-erbium. The thus obtained tris-phenanthylphenylketonato-erbium was soluble in styrene, divinylbenzene, methyl-methacrylate, benzyl-methacrylate, phenyl-methacrylate, diallylphthalate, and diethyleneglycol-bisallyl-carbonate.

(Production Example 7) Production of tris-acetylacetonato-holmium

6.0 g of acetylacetone was dissolved in 4% ammonia aqueous solution, and the acetylacetone - ammonia aqueous solution was added to a holmium acetate aqueous solution obtained by dissolving 9.10 g of holmium acetate tetrahydrate in 50 ml of water to obtain rose crystalline tris-acetylacetonato-holmium. The thus obtained tris-acetylacetonato-holmium was soluble in styrene, divinylbenzene, phenyl-methacrylate, tetrahydrofurfuryl-methacrylate, and diethyleneglycol-bisallyl-carbonate.

(Production Example 8) Production of tris-bensoylacetonato-holmium

2.43 g of benzoylacetone was dissolved in 5% ammonia aqueous solution, and the benzoylacetone - ammonia aqueous solution was added to a holmium acetate aqueous solution obtained by dissolving 2.28 g of holmium acetate tetrahydrate in 50 ml of water to obtain light yellow crystalline tris-benzoylacetonato-holmium. The thus obtained tris-benzoylacetonato-holmium was soluble in styrene, divinylbenzene, methyl-methacrylate, benzyl-methacrylate, phenyl-methacrylate, diallyl-phthalate, and diethyleneglycol-bisallyl-carbonate.

(Production Example 9) Production of tris-phenanthylphenylketonato-holmium

3.36 g of phenanthylphenylketone was dissolved in 5% ammonia aqueous solution, and the phenanthylphenylketone - ammonia aqueous solution was added to a holmium acetate aqueous solution obtained by dissolving 2.28 g of holmium acetate tetrahydrate in 50 ml of water to obtain rose crystalline tris-phenanthylphenylketonato-holmium. The thus obtained tris-phenanthylphenylketonato-holmium was soluble in styrene, divinylbenzene, methyl-methacrylate, benzyl-methacrylate, phenyl-methacrylate, diallylphthalate, and diethyleneglycol-bisallyl-carbonate.

(Production Example 10) Production of tris($\alpha$-nitroso-$\beta$-naphthol)-neodymium

3.587 g of neodymium chloride hexahydrate was dissolved in 5% hydrochloric acid aqueous solution to obtain a hydrochloric acid aqueous solution of neodymium salt. 7.0 g of $\alpha$-nitroso-$\beta$-naphthol and the hydrochloric acid aqueous solution of neodymium salt were mixed with 50% acetic acid aqueous solution and then with ethanol, to obtain blue-green crystalline tris($\alpha$-nitroso$\beta$-naphthol)-neodymium. The crystals were filtered and dried. The thus obtained tris($\alpha$-nitroso$\beta$-naphthol)-neodymium was soluble in styrene, divinylbenzene, methyl-methacrylate, benzyl-methacrylate, phenyl-methacrylate, diallylphthalate, and diethyleneglycol-bisallyl-carbonate.

(Production Example 11) Production of tris($\alpha$-nitroso-$\beta$-naphthol)-erbium

3.817 g of erbium chloride hexahydrate was dissolved in 5% hydrochloric acid aqueous solution to obtain a hydrochloric acid aqueous solution of erbium salt. 7.0 g of $\alpha$-nitroso-$\beta$-naphthol and the hydrochloric acid aqueous solution of erbium salt were mixed with 50% acetic acid aqueous solution and then with ethanol, to obtain blue-green crystalline tris($\alpha$-nitroso$\beta$-naphthol)-erbium. The crystals were filtered and dried. The thus obtained tris($\alpha$-nitroso$\beta$-naphthol)-erbium was soluble in styrene, divinylbenzene, methyl-methacrylate, benzyl-methacrylate, phenyl-methacrylate, diallylphthalate, and diethyleneglycol-bisallyl-carbonate.

(Production Example 12) Production of tris($\alpha$-nitroso-$\beta$-naphthol)-holmium

3.794 g of neodymium chloride hexahydrate was dissolved in 5% hydrochloric acid aqueous solution to obtain a hydrochloric acid aqueous solution of holmium salt. 7.0 g of $\alpha$-nitroso-$\beta$-naphthol and the hydrochloric acid aqueous solution of holmium salt were mixed with 50% acetic acid aqueous solution and then with ethanol, to obtain blue-green crystalline tris($\alpha$-nitroso$\beta$-naphthol)-holmium. The crystals were filtered and dried. The thus obtained tris($\alpha$-nitroso$\beta$-naphthol)-holmium was soluble in styrene, divinylbenzene, methyl-methacrylate, benzyl-methacrylate, phenyl-methacrylate, diallylphthalate, and diethyleneglycol-bisallyl-carbonate.

(Production Example 13) Production of 8-oxyquinoline-chelate of neodymium

4.35 g of 8-oxyquinoline was dissolved in 5% hydrochloric acid aqueous solution, and the dilute acid aqueous solution of 8-oxyquinoline was added to a neodymium chloride aqueous solution obtained by dissolving 3.587 g of neodymium chloride hexahydrate in 50 ml of water to obtain purple crystalline tris(8-oxyquinoline)-neodymium. The thus obtained tris(8-oxyquinoline)-neodymium was soluble in styrene, divinylbenzene, phenyl-methacrylate, tetrahydrofurfuryl-methacrylate, diallylphthalate, and diethyleneglycol-bisallyl-carbonate.

(Production Example 14) Production of 8-oxyquinoline-chelate of erbium

4.35 g of 8-oxyquinoline was dissolved in 5% hydrochloric acid aqueous solution, and the dilute acid aqueous solution of 8-oxyquinoline was added to an erbium chloride aqueous solution obtained by dissolving 3.587 g of erbium chloride hexahydrate in 50 ml of water to obtain purple crystalline tris(8-oxyquinoline)-erbium. The thus obtained tris(8-oxyquinoline)-neodymium was soluble in styrene, divinylbenzene, phenyl-methacrylate, tetrahydrofurfuryl-methacrylate, diallylphthalate, and diethyleneglycol-bisallyl-carbonate.

(Production Example 15) Production of 8-oxyquinoline-chelate of holmium

4.35 g of 8-oxyquinoline was dissolved in 5% hydrochloric acid aqueous solution, and the dilute acid aqueous solution of 8-oxyquinoline was added to a holmium chloride aqueous solution obtained by dissolving 3.587 g of holmium chloride hexahydrate in 50 ml of water to obtain purple crystalline tris(8-oxyquinoline)-holmium. The thus obtained tris(8-oxyquinoline)-holmium was soluble in styrene, divinylbenzene, phenyl-methacrylate, tetrahydrofurfuryl-methacrylate, diallylphthalate, and diethyleneglycol-bisallyl-carbonate.

(Production Example 16) Production of tris-vinylbenzoylacetonato-neodymium

When 13.8 g of chlorostyrene and 100 ml of dried ether were placed in a flask, and 2.4 g of metallic magnesium was put into the mixture, an exothermic reaction took place. After completion of the reaction, the reaction mixture was mixed with 4.1 g of acetonitrile and stirred at room temperature for 10 hours. The reaction mixture was hydrolyzed by mixing with water and a small amount of acid to obtain vinylphenylmethylketone.

When 7.2 g of vinylphenylmethylketone and 4.4 g of ethyl acetate were dissolved in 100 ml of dried ether, and refluxed at 50 °C in the presence of sodium ethoxide as a catalyst, a condensation reaction took place to obtain vinylbenzoylacetone.

2.3 g of the above-obtained vinylbenzoylacetone was dissolved in 100 ml of 5% ammonia aqueous solution, and the vinylbenzoylacetone-ammonia aqueous solution was slowly added to a neodymium acetate aqueous solution obtained by dissolving 1.4 g of neodymium acetate in 100 ml of water under stirring to obtain a blue-white precipitate. The precipitate was washed and dried to obtain tris-benzoylacetonato-neodymium.

The trisvinylbenzoylacetonato-neodymium was soluble in styrene, divinylbenzene, methyl-methacrylate, benzyl-methacrylate, phenyl-methacrylate, diallylphthalate, and diethyleneglycol-bisallyl-carbonate.

[Examples]

(Example - 1)

| | |
|---|---|
| Bifunctional urethane-methacrylate of formula (21) | 50 parts by wt. |
| Polyethyleneglycol-dimethacrylate of formula (22) | 10 |
| Phenylmethacrylate | 40 |
| 2-hydroxy-2-methyl-1-phenylpropane-1-one (Merck Dalocure-1173) | 1 |
| t-butylperoxy-isopropylcarbonate | 0.5 |

A photopolymerizable composition comprising the above ingredients was mixed with 2 parts by weight of tris-acetylacetonato-neodymium, and dissolved at 50 °C.

(21)

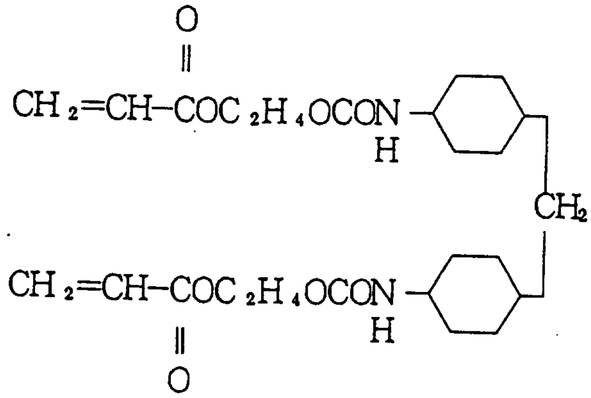

(22)

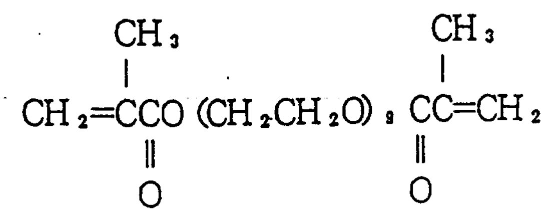

The mixture was then mixed with 10 ppm of a yellow dyestuff Quinoline Yellow-SS.

The mixture was injected into a molding die comprising a mirror-finished glass 80 mm in outer diameter and 386 mm in curvature and a mirror-finished glass 80 mm in outer diameter and 65 mm in curvature, combined to form a concave lens with a thickness of 1.5 mm at the center and surrounded at the outer periphery by a plastic gasket. The molding die was continuously irradiated from both surfaces with a 2-kW high-pressure mercury lamp at an illuminance of 400 $mW/cm^2$ for 3 minutes to cure the monomer. The mold was allowed to cool to an ambient temperature of 60 °C, and the lens was released from the glass mold. The lens was washed and annealed at 100 °C for 2 hours.

Whereas a lens obtained by curing the above mixture, without mixing with the yellow dyestuff Quinoline Yellow-SS, using the same procedure showed a blue-purple color, the lens obtained in this Example was nearly colorless although having a slightly grayish color. Furthermore, the lens of this Example had a low light transmittance of 50% at 580 nm which is a characteristic absorption of neodymium, and high transmittances of more than 85% for other wavelengths.

The lens was surface treated with a commercial ultraviolet-curing hard organic coating. For comparison, a lens using no tris-acetylacetonato-neodymium was fabricated, the lens color was adjusted to the same color as the above lens with a dyestuff, and actually worn for evaluation of glare. As a result, the lens of this Example considerably reduced the glare due to direct sunlight and car headlights. The lens of this Example coated with the antireflection coating became possible to prevent a flicker.

Furthermore, when the lens was allowed to stand for one week under a high temperature and high humidity environment at a temperature of 60 °C and a humidity of 95%, the water absorption was 1.0%. When the lens provided with an inorganic deposition film for antireflection was allowed to stand for one week under a high temperature and high humidity environment at a temperature of 60 °C and a humidity of 95%, no occurrence of cracking was noted in the deposition film.

(Example - 2)

| | |
|---|---|
| Bifunctional urethane-methacrylate of formula (21) | 50 parts by wt. |
| Polyethyleneglycol-dimethacrylate of formula (22) | 10 |
| Phenylmethacrylate | 40 |
| 2-hydroxy-2-methyl-1-phenylpropane-1-one (Merck Dalocure-1173) | 1 |
| t-butylperoxy-isopropylcarbonate | 0.5 |

A photopolymerizable composition comprising the above ingredients was mixed with 3 parts by weight of tris-(C-methylacetylacetonato)-neodymium, and dissolved at 50 ° C.

The mixture was then mixed with 15 ppm of a yellow dyestuff Quinoline Yellow-SS.

The mixture was injected into a molding die comprising two glass molds and a plastic gasket, and irradiated with ultraviolet rays of 1 x $10^5$ mJ using a 80 W/cm high-pressure mercury lamp to obtain a 2-mm thick, highly transparent plate-formed polymer.

Whereas a lens obtained by curing the above mixture, without mixing with the yellow dyestuff Quinoline Yellow-SS, using the same procedure showed a blue-purple color, the lens obtained in this Example was nearly colorless although having a slightly grayish color. The lens had a low light transmittance of 50% at 520 nm, and high transmittances of more than 85% for other wavelengths, with a good glare-proof effect. Furthermore, when the plate-formed polymer was allowed to stand for one week under a high temperature and high humidity environment at a temperature of 60 ° C and a humidity of 95%, the water absorption was 1.0%. When the plate-formed polymer was coated on the surface with an antireflection inorganic deposition film, and allowed to stand for one week under the above high temperature and high humidity environment, no occurrence of cracking was noted in the deposition film.

(Example - 3)

52 parts by weight of diallyl-isophthalate, 16 parts by weight of dibenzyl-itaconate, 32 parts by weight of diethyleneglycol-bisallyl-carbonate, 0.1 part by weight each of ethyl-2-cyano-3,3-diphenylacrylate and 2-(2'-hydroxy-5'-methylphenyl)benzotriazole as ultraviolet absorption agents were mixed, and further mixed with 3.65 parts by weight of di-n-propylperoxy-dicarbonate as a polymerization initiator and 2 parts by weight of tris-acethylacetonato-neodymium, and stirred at room temperature for 2 hours. The mixture was then uniformly mixed with 10 ppm of a yellow dyestuff Titanium Yellow ($TiO_2$ • BaO • NiO) and 0.5 parts by weight of NS-210 (Nippon Oil & Fats) (polyoxyethylene-nonylphenylether) as a pigment dispersant. The mixture was injected into the same glass mold as used in Example-1, the temperature was moderately increased from 40 ° C to 90 ° C in 13 hours in a hot air recirculation heating furnace and maintained at 90 ° C for one hour, and then cooled to 70 ° C and the lens released from the glass mold. The lens was then annealed at 100 ° C for 2 hours to remove internal stress.

Whereas a lens obtained by polymerizing the above mixture, without mixing with the yellow dyestuff Titanium Yellow ($TiO_2$ • BaO • NiO), using the same procedure showed a blue-purple color, the lens obtained in this Example was nearly colorless although having a slightly grayish color. The lens had a low light transmittance of 60% at 580 nm which is a characteristic absorption of neodymium, with a good glare-proof effect.

When the lens was provided on the surface with an antireflection inorganic deposition film and allowed to stand for one week under a high temperature and high humidity environment at a temperature of 60 ° C and a humidity of 90%, no occurrence of cracking or peeling was noted in the deposition film.

Furthermore, a lens was fabricated using the same composition and procedure except that tris-acetylacetonato-neodymium, Titanium Yellow ($TiO_2$ • BaO • NiO) pigment, and the pigment dispersant were not used, the lens color was adjusted by dyeing to the same color as above, and the lens was provided with an antireflection film. This lens was used as a comparative sample in an actual wearing test. As a result, the lens of this Example considerably reduced the glare due to direct sunlight and car headlights, without darkening the sight.

(Example - 4)

92 parts by weight of diethyleneglycol-bisallyl-carbonate, 6 parts by weight of diisopropylperoxy-dicarbonate, and 280 ppm) of 2-hydroxy-4-methoxybenzophenone as an ultraviolet absorber were mixed,

then mixed with 2 parts by weight of tris-acetylacetonato-neodymium, and a preliminary polymerization was carried out by heating to 40 ° C under agitation until a viscosity of 80 centipoises, measured by means of an SB-type viscometer, was obtained.

The result was uniformly mixed under stirring with 10 ppm of a yellow pigment, yellow iron oxide ($Fe_2O_3 \cdot H_2O$), and 0.5 parts by weight of Nippon Oil & Fats NS-210 (polyoxyethylene-nonylphenylether) as a pigment dispersant.

The resulting mixture was polymerized using the same temperature pattern as used in Example-2 to form an eyeglass lens for sight accommodation.

Whereas a lens obtained by polymerizing the above mixture, without mixing with the yellow pigment yellow iron oxide ($Fe_2O_3 \cdot H_2O$), using the same procedure showed a blue-purple color, the lens obtained in this Example was nearly colorless although having a slightly grayish color. The lens had a low light transmittance of 60% at 580 nm which is a characteristic absorption of neodymium, with a good glare-proof effect.

When the lens was provided on the surface with an antireflection inorganic deposition film and allowed to stand for one week under a high temperature and high humidity environment at a temperature of 60 ° C and a humidity of 90%, no occurrence of cracking or peeling was noted in the deposition film.

Furthermore, a lens was fabricated using the same composition and procedure except that tris-acetylacetonato-neodymium, yellow iron oxide ($Fe_2O_3 \cdot H_2O$) pigment, and the pigment dispersant were not used, the lens color was adjusted by dyeing to the same color as above, and the lens was provided with an antireflection film. This lens was used as a comparative sample in an actual wearing test. As a result, the lens of this Example considerably reduced the glare due to direct sunlight and car headlights, without darkening the sight.

(Example - 5)

2 parts by weight of tris-acetylacetonato-neodymium, 50 parts by weight of o-chlorostyrene, 40 parts by weight of 2,2-bis(4-methacroyloxyethoxy-3,5-dibromophenyl)propane, 8 parts by weight of diethyleneglycol-bisallyl-carbonate, 0.4 parts by weight of 2-(2'-hydroxy-5'-methylphenyl) benzotriazole, 10 ppm of yellow dyestuff Benzidine Yellow G, and 0.4 parts by weight of lauroylperoxide were mixed under stirring. The mixture was stirred at 30 ° C to increase the viscosity to 80 cps. The mixture was then filtered, and the filtrate was injected into a space formed by a gasket made of soft polyvinylchloride and two glass molds. The result was maintained at 30 ° C for 4 hours, the temperature was increased linearly from 30 ° C to 50 ° C in 10 hours, then linearly from 50 ° C to 70 ° C in 2 hours, heated at 70 ° C for one hour and at 80 ° C for 2 hours, and the gasket and the glass molds were removed from the lens. The lens was then annealed at 100 ° C for 3 hours.

Whereas a lens obtained by polymerizing the above mixture, without mixing with the yellow dyestuff Benzidine Yellow G, using the same procedure showed a blue-purple color, the lens obtained in this Example had a refractive index of 1.60 and was nearly colorless although having a slightly grayish color. The lens had a low light transmittance of 60% at 580 nm which is a characteristic absorption of neodymium, and high transmittances of more than 85% for other wavelengths, with a good glare-proof effect.

When the lens was provided on the surface with an antireflection inorganic deposition film and allowed to stand for one week under a high temperature and high humidity environment at a temperature of 60 ° C and a humidity of 90%, no occurrence of cracking or peeling was noted in the deposition film.

Furthermore, a lens was fabricated using the same composition and procedure except that tris-acetylacetonato-neodymium and yellow dyestuff Benzidine Yellow G were not used, the lens color was adjusted by dyeing to the same color as above, and the lens was provided with an antireflection film. This lens was used as a comparative sample in an actual wearing test. As a result, the lens of this Example considerably reduced the glare due to direct sunlight and car headlights, without darkening the sight.

(Example - 6)

5 parts by weight of tris-acetylacetonato-neodymium, 62 parts by weight of styrene, 30 parts by weight of 2,2-bis(4-methacroyloxyethoxy-3,5-dibromophenyl)propane, 3 parts by weight of diethyleneglycol-bisallyl-carbonate, 0.2 parts by weight of diisopropylperoxy-dicarbonate, and 18 ppm of a yellow dyestuff, Hanza Yellow were mixed under stirring. The mixture was cast polymerized using the same procedure as in Example 5.

Whereas a lens obtained by polymerizing the above mixture, without mixing with the yellow dyestuff Hanza Yellow, using the same procedure showed a blue-purple color, the lens obtained in this Example had

a refractive index of 1.59 and was nearly colorless although having a slightly grayish color. The lens had a low light transmittance of 30% at 580 nm which is a characteristic absorption of neodymium, with a good glare-proof effect. Furthermore, the lens blocked ultraviolet rays of less than 400 nm, thus enabling protection of eyes from harmful ultraviolet rays. The spectral characteristic curve of the lens in this Example is shown in Fig.1.

When the lens was provided on the surface with an antireflection inorganic deposition film and allowed to stand for one week under a high temperature and high humidity environment at a temperature of 60 °C and a humidity of 90%, no occurrence of cracking or peeling was noted in the deposition film.

Furthermore, a lens was fabricated using the same composition and procedure except that tris-acetylacetonato-neodymium and yellow dyestuff Hanza Yellow were not used, the lens color was adjusted by dyeing to the same color as above, and the lens was provided with an antireflection film. This lens was used as a comparative sample in an actual wearing test. As a result, the lens of this Example considerably reduced the glare due to direct sunlight and car headlights, without darkening the sight.

(Example - 7)

3 parts by weight of tris-acetylacetonato-neodymium was dissolved in 100 parts by weight of diethyleneglycolbisallyl-carbonate, and then mixed with 3 parts by weight of diisopropylperoxy-dicarbonate as a polymerization catalyst. The mixture was uniformly mixed with 10 ppm of yellow lead ($PbCrO_4$) and 0.5 parts by weight of Nippon Oil & Fats NS-210 (polyoxyethylene-nonylphenylether).

The mixture was injected into a cast molding die comprising two glass molds and a plastic gasket, maintained at 40 °C for 2 hours in a hot air recirculation heating furnace, the temperature was increased from 40 °C to 80 °C over a period of 17 hours, maintained at 80 °C for one hour, and then cooled to 70 °C in 2 hours. The polymer was removed from the molding die, and annealed at 100 °C for 2 hours.

The resulting plate-formed polymer had a low light transmittance of 50% at 580 nm, and high transmittances of more than 85% for other wavelengths, with a good glare-proof effect.

Whereas a lens obtained by polymerizing the above mixture, without mixing with the yellow pigment yellow lead ($PbCrO_4$), using the same procedure showed a blue-purple color, the lens obtained in this Example was nearly colorless and transparent although having a slightly grayish color.

The plate-formed polymer, when allowed to stand for one week under a high temperature and high humidity environment at a temperature of 60 °C and a humidity of 90%, showed a water absorption rate of 1.5%. This value was substantially better than that when water-soluble neodymium acetate was used to obtain a glare-proof effect. When the plate-formed polymer was provided on the surface with an antireflection inorganic deposition film and allowed to stand for one week under the high temperature and high humidity environment, no occurrence of cracking was noted in the deposition film.

(Example - 8)

| | |
|---|---|
| Bifunctional urethane-methacrylate of formula (21) | 50 parts by wt. |
| Polyethyleneglycol-dimethacrylate of formula (22) | 10 |
| Phenylmethacrylate | 40 |
| 2-hydroxy-2-methyl-1-phenylpropane-1-one (Merck Dalocure-1173) | 1 |
| t-butylperoxy-isopropylcarbonate | 0.5 |

A photopolymerizable composition comprising the above ingredients was mixed with 3 parts by weight of tris-acryloyloxy-benzoylacetonato-neodymium and dissolved. The mixture was then mixed with 15 ppm of a yellow dyestuff Quinoline Yellow-SS.

The mixture was injected into a cast molding die comprising two glass molds and a plastic gasket, and irradiated with ultraviolet rays of 1 x $10^5$ mJ using a 80 W/cm high-pressure mercury lamp to obtain a 2 mm thick; nearly colorless, transparent plate-formed polymer.

The thus obtained plate-formed polymer had a low light transmittance of 50% at a wavelength of 580 nm, and high transmittances of more than 85% for other wavelengths, with a good glare-proof effect.

Whereas a lens obtained by curing the above mixture, without mixing with the yellow dyestuff Quinoline Yellow-SS, using the same procedure showed a blue-purple color, the polymer obtained in this Example was nearly colorless and transparent although having a slightly grayish color.

Furthermore, when the plate-formed polymer was allowed to stand for one week under a high temperature and high humidity environment at a temperature of 60°C and a humidity of 95%, the water absorption rate was 1.0%. This value was substantially better than that when neodymium acetate, which is a water-soluble neodymium salt, was used to obtain a glare-proof effect. When the plate-formed polymer provided on the surface with an inorganic deposition film for antireflection was allowed to stand for one week under the above high temperature and high humidity environment, no occurrence of cracking was noted in the deposition film.

(Example - 9)

2 parts by weight of tris-acetylacetonato-erbium was dissolved in 100 parts by weight of diethyleneglycol-bisallyl-carbonate, and then mixed with 3 parts by weight of diisopropylperoxy-dicarbonate as a polymerization initiator, 0.02 parts by weight of 2-hydroxy-4-methoxybenzophenone as an ultraviolet absorber, a green pigment Emerald Green ($Cu(C_2H_3O_2) \cdot 3Cu(AsO_2)_2$), and 0.5 parts by weight of Nippon Oil & Fats NS-210 (polyoxyethylene-nonylphenylether) as a pigment dispersant.

The mixture was injected into a cast molding die comprising two glass molds and a plastic gasket, maintained at 40°C for 2 hours in a hot air recirculation heating furnace, the temperature was increased from 40°C to 80°C over a period of 17 hours, maintained at 80°C for one hour, and then cooled to 70°C in 2 hours. The polymer was removed from the molding die, and annealed at 100°C for 2 hours.

Whereas a polymer obtained by polymerizing the above mixture, without mixing with the green pigment Emerald Green, using the same procedure showed a rose color, the polymer obtained in this Example was nearly colorless and transparent although having a slightly grayish color.

The resulting plate-formed polymer had a low light transmittance of 60% at 520 nm, and high transmittances of more than 85% for other wavelengths, with a good glare-proof effect in a dark place.

(Example - 10)

2 parts by weight of tris-benzoylacetonato-erbium, 50 parts by weight of o-chlorostyrene, 40 parts by weight of 2,2-bis(4-methacroyloxyethoxy-3,5-dibromophenyl)propane, 8 parts by weight of diethyleneglycol-bisallyl-carbonate, 10 ppm of green dyestuff Quinizarine Green SS, and 0.4 parts by weight of lauroylperoxide were mixed under stirring. The mixture was stirred at 30°C to increase the viscosity to 80 cps. The mixture was then filtered, and the filtrate was injected into a space formed by a gasket made of soft polyvinylchloride and two glass molds. The result was maintained at 30°C for 4 hours, the temperature was increased linearly from 30°C to 50°C in 10 hours, then linearly from 50°C to 70°C in 2 hours, heated at 70°C for one hour and at 80°C for 2 hours, and the gasket and the glass molds were removed from the lens. The lens was then annealed at 100°C for 3 hours.

Whereas a lens obtained by polymerizing the above mixture, without mixing with the green dyestuff Quinizarine Green SS, using the same procedure showed a rose color, the lens obtained in this Example had a refractive index of 1.60 and was nearly colorless and transparent although having a slightly grayish color. The lens had a low light transmittance of 60% at 520 nm, blocked ultraviolet rays of less than 400 nm, had a reduced transmittance to 1,000-1,500 nm near-infrared rays, and a high transmittance of more than 85% for other wavelengths. Therefore, the thus obtained lens had a good glare-proof effect in a dark place, without reducing the intensity of other visible light, while blocking the effect of ultraviolet rays and reducing near-infrared rays. When the lens was allowed to stand for one week under a high temperature and high humidity environment at a temperature of 60°C and a humidity of 95%, the water absorption rate was 1.5%. This value was substantially better than that when erbium acetate, which is a water-soluble erbium salt, was used to obtain a glare-proof effect. When the lens was provided on the surface with an inorganic deposition film for antireflection and was allowed to stand for one week under the above high temperature and high humidity environment, no occurrence of cracking was noted in the deposition film.

(Example - 11)

5 parts by weight of tris-phenanthylketonato-erbium, 62 parts by weight of styrene, 30 parts by weight of 2,2-bis(4-methacroyloxyethoxy-3,5-dibromophenyl)propane, 3 parts by weight of diethyleneglycol-bisallyl-carbonate, 0.2 parts by weight of diisoplopylperoxy-dicarbonate, and 15 ppm of green dyestuff Quinizarine Green SS were mixed under stirring. The mixture was cast polymerized using the same procedure as in Example-10.

Whereas a lens obtained by polymerizing the above mixture, without mixing with the green dyestuff Quinizarine Green SS, using the same procedure showed a rose color, the lens obtained in this Example had a refractive index of 1.59 and was nearly colorless and transparent although having a slightly grayish color.

The lens had a low light transmittance of 30% at 520 nm, blocked ultraviolet rays of less than 400 nm, had a reduced transmittance to 1,000-1,500 nm near-infrared rays, and a high transmittance of more than 85% for other wavelengths. Therefore, the thus obtained lens had a good glare-proof effect in a dark place, without reducing the intensity of other visible light, while blocking the effect of ultraviolet rays and reducing near-infrared rays. When the lens was allowed to stand for one week under a high temperature and high humidity environment at a temperature of 60 °C and a humidity of 95%, the water absorption rate was 1.5%. This value was substantially better than that when erbium acetate, which is a water-soluble erbium salt, was used to obtain a glare-proof effect. When the plate-formed polymer was provided on the surface with an inorganic deposition film for antireflection and was allowed to stand for one week under the above high temperature and high humidity environment, no occurrence of cracking was noted in the deposition film.

(Example - 12)

| | |
|---|---|
| Bifunctional urethane-methacrylate of formula (21) | 50 parts by wt. |
| Polyethyleneglycol-dimethacrylate of formula (22) | 10 |
| Phenylmethacrylate | 40 |
| 2-hydroxy-2-methyl-1-phenylpropane-1-one (Merck Dalocure-1173) | 1 |
| t-butylperoxy-isopropylcarbonate | 0.5 |

A photopolymerizable composition comprising the above ingredients was mixed with 3 parts by weight of tris-acetylacetonato-erbium and dissolved at 50 °C.

The mixture was injected into a cast molding die comprising two glass molds and a plastic gasket, and irradiated with ultraviolet rays of 1 x $10^5$ mJ using a 80 W/cm high-pressure mercury lamp to obtain a 2 mm thick, nearly colorless, highly transparent plate-formed polymer, although with a slightly grayish color.

The thus obtained plate-formed polymer had a low light transmittance of 50% at a wavelength of 520 nm, and high transmittances of more than 85% for other wavelengths. Therefore, the plate-formed polymer had a good glare-proof effect in a dark place, without reducing the intensity of other visible light and while blocking the effect of ultraviolet rays and reducing near-infrared rays. When the plate-formed polymer was allowed to stand for one week under a high temperature and high humidity environment at a temperature of 60 °C and a humidity of 95%, the water absorption rate was 1.5%. This value was substantially better than that when erbium acetate, which is a water-soluble erbium salt, was used to obtain a glare-proof effect. When the plate-formed polymer was provided on the surface with an inorganic deposition film for antireflection and was allowed to stand for one week under the above high temperature and high humidity environment, no occurrence of cracking was noted in the deposition film.

(Example - 13)

2 parts by weight of tris-acetylacetonato-holmium was dissolved in 100 parts by weight of diethyleneglycol-bisallyl-carbonate, then mixed with 3 parts by weight of diisopropylperoxy-dicarbonate as a polymerization initiator, 0.02 parts by weight of 2-hydroxy-4-methoxybenzophenone as an ultraviolet absorber, 10 ppm of blue pigment Ultramarine Blue ($Na_6Al_6(SiO_4)_6 \cdot 2Na_3SO_4$), and 0.5 parts by weight of Nippon Oil & Fats NS-210 (polyoxyethylene-nonylphenylether) as a pigment dispersant and stirred.

The mixture was injected into a cast molding die comprising two glass molds and a plastic gasket, maintained at 40 °C for 2 hours in a hot air recirculation heating furnace, the temperature was increased from 40 °C to 80 °C over a period of 17 hours, maintained at 80 °C for one hour, and then cooled to 70 °C in 2 hours. The polymer was removed from the molding die, and annealed at 100 °C for 2 hours.

Whereas a polymer obtained by polymerizing the above mixture, without mixing with the blue pigment Ultramarine Blue, using the same procedure showed a yellow-orange color, the polymer obtained in this Example was nearly colorless and transparent although having a slightly grayish color.

The plate-formed polymer had a low light transmittance of 60% at 450 nm, and high transmittances of more than 85% for other wavelengths, with a good glare-proof effect in a dark place.

(Example - 14)

2 parts by weight of tris-benzoylacetonato-holmium, 50 parts by weight of o-chlorostyrene, 40 parts by weight of 2,2-bis(4-methacroyloxyethoxy-3,5-dibromophenyl)propane, 8 parts by weight of diethyleneglycol-bisallyl-carbonate, 10 ppm of blue dyestuff Alizurine Purple SS, and 0.4 parts by weight of lauroylperoxide were mixed under stirring. The mixture was stirred at 30 °C to increase the viscosity to 80 cps. The mixture was then filtered, and the filtrate was injected into a space formed by a gasket made of soft polyvinylchloride and two glass molds. The result was maintained at 30 °C for 4 hours; the temperature was increased linearly from 30 °C to 50 °C in 10 hours, then linearly from 50 °C to 70 °C in 2 hours, heated at 70 °C for one hour and at 80 °C for 2 hours, and the gasket and the glass molds were removed from the lens. The lens was then annealed at 100 °C for 3 hours.

Whereas a lens obtained by polymerizing the above mixture, without mixing with the blue dyestuff Alizurine Purple SS, using the same procedure showed a yellow-orange color, the lens obtained in this Example had a refractive index of 1.60 and was nearly colorless and transparent although having a slightly grayish color.

The lens had a low light transmittance of 60% at 450 nm, blocked ultraviolet rays of less than 400 nm, had a reduced transmittance to 1,000-1,500 nm near-infrared rays, and a high transmittance of more than 85% for other wavelengths. Therefore, the thus obtained lens had a good glare-proof effect in a dark place, without reducing the intensity of other visible light, while blocking the effect of ultraviolet rays and reducing near-infrared rays. When the lens was allowed to stand for one week under a high temperature and high humidity environment at a temperature of 60 °C and a humidity of 95%, the water absorption rate was 1.5%. This value was substantially better than that when holmium acetate, which is a water-soluble holmium salt, was used to obtain a glare-proof effect. When the lens was provided on the surface with an inorganic deposition film for antireflection and was allowed to stand for one week under the above high temperature and high humidity environment, no occurrence of cracking was noted in the deposition film.

(Example - 15)

5 parts by weight of tris-phenanthylketonato-holmium, 62 parts by weight of styrene, 30 parts by weight of 2,2-bis(4-methacroyloxyethoxy-3,5-dibromophenyl)propane, 3 parts by weight of diethyleneglycol-bisallyl-carbonate, 0.2 parts by weight of diisopropylperoxy-dicarbonate, and 15 ppm of blue dyestuff Alizurine Purple SS were mixed under stirring. The mixture was cast polymerized using the same procedure as in Example-10. The resulting polymer had a refractive index of 1.59 and was nearly colorless and transparent although having a slightly grayish color. The lens had a low light transmittance of 30% at 450 nm, blocked ultraviolet rays of less than 400 nm, had a reduced transmittance to 1,000-1,500 nm near-infrared rays, and a high transmittance of more than 85% for other wavelengths. Therefore, the thus obtained plate-formed polymer had a good glare-proof effect in a dark place, without reducing the intensity of other visible light, while blocking the effect of ultraviolet rays and reducing near-infrared rays. When the plate-formed polymer was allowed to stand for one week under a high temperature and high humidity environment at a temperature of 60 °C and a humidity of 95%, the water absorption rate was 1.5%. This value was substantially better than that when holmium acetate, which is a water-soluble holmium salt, was used to obtain a glare-proof effect. When the plate-formed polymer was provided on the surface with an inorganic deposition film for antireflection and was allowed to stand for one week under the above high temperature and high humidity environment, no occurrence of cracking was noted in the deposition film.

(Example - 16)

| | |
|---|---|
| Bifunctional urethane-methacrylate of formula (21) | 50 parts by wt. |
| Polyethyleneglycol-dimethacrylate of formula (22) | 10 |
| Phenylmethacrylate | 40 |
| 2-hydroxy-2-methyl-1-phenylpropane-1-one (Merck Dalocure-1173) | 1 |
| t-butylperoxy-isopropylcarbonate | 0.5 |

A photopolymerizable composition comprising the above ingredients was mixed with 3 parts by weight of tris-acetylacetonato-holmium and dissolved at 50 °C.

The mixture was injected into a cast molding die comprising two glass molds and a plastic gasket, and irradiated with ultraviolet rays of 1 x $10^5$ mJ using a 80 W/cm high-pressure mercury lamp to obtain a 2 mm thick, nearly colorless, highly transparent plate-formed polymer, although with a slightly grayish color.

The thus obtained plate-formed polymer had a low light transmittance of 50% at a wavelength of 450 nm, and high transmittances of more than 85% for other wavelengths. Therefore, the plate-formed polymer had a good glare-proof effect in a dark place, without reducing the intensity of other visible light. When the plate-formed polymer was allowed to stand for one week under a high temperature and high humidity environment at a temperature of 60°C and a humidity of 95%, the water absorption rate was 1.0%. This value was substantially better than that when holmium acetate, which is a water-soluble holmium salt, was used to obtain a glare-proof effect. When the plate-formed polymer was provided on the surface with an inorganic deposition film for antireflection and was allowed to stand for one week under the above high temperature and high humidity environment, no occurrence of cracking was noted in the deposition film.

(Example - 17)

2 parts by weight of tris-benzoylacetonato-holmium, 50 parts by weight of styrene, 40 parts by weight of 2,2-bis(4-methacroyloxyethoxyphenyl) propane, 8 parts by weight of diethyleneglycol-bisallyl-carbonate, 0.4 parts by weight of lauroylperoxide, and 10 ppm of blue dyestuff Alizurine Purple SS were mixed under stirring. The mixture was stirred at 30°C to increase the viscosity to 80 cps. The mixture was then filtered, and the filtrate was injected into a cast molding die comprising two glass molds and a plastic gasket. The result was maintained at 30°C for 4 hours, the temperature was increased linearly from 30°C to 50°C in 10 hours, then linearly from 50°C to 70°C in 2 hours, heated at 70°C for one hour and at 80°C for 2 hours, then the polymer was removed from the molding die, and annealed at 100°C for 2 hours.

Whereas a polymer obtained by polymerizing the above mixture, without mixing with the blue dyestuff Alizurine Purple SS, using the same procedure showed a yellow-orange color, the polymer obtained in this Example was nearly colorless and transparent although having a slightly grayish color.

The polymer had a low light transmittance of 60% at 450 nm, blocked ultraviolet rays of less than 400 nm, had a reduced transmittance to 1,300-2,000 nm near-infrared rays, and high transmittances of more than 80% for other wavelengths. Therefore, the thus obtained polymer had a good glare-proof effect in a dark place, without reducing the intensity of other visible light, while blocking the effect of ultraviolet rays and reducing near-infrared rays. When the plate-formed polymer was allowed to stand for one week under a high temperature and high humidity environment at a temperature of 60°C and a humidity of 95%, the water absorption rate was 1.5%. This value was substantially better than that when holmium acetate, which is a water-soluble holmium salt, was used to obtain a glare-proof effect. When the plate-formed polymer was provided on the surface with an inorganic deposition film for antireflection and was allowed to stand for one week under the above high temperature and high humidity environment, no occurrence or cracking was noted in the deposition film.

(Example - 18)

1 part by weight of tris-acetylacetonato-neodymium and 1 part by weight of tris-acetylacetonato-holmium were mixed with a reactive mixture comprising 52 % by weight of xylylene-diisocyanate, 48 % by weight of 4-mercaptomethyl-3,6-dithia-1,8-cotanedithiol, 600 ppm of ultraviolet absorber 2-(2-hydroxy-5-t-octylphenyl)-benzotriazole, dibutyl dichloride as a catalyst, and a minute amount of alkyl-biphosphoric ester as a releasing agent, and stirred for 20 minutes to remove traces of moisture and air contained in the raw materials. The reactive mixture was injected into the mold described in Example-1, and the temperature was gradually increased from 40°C in a hot air recirculation heating furnace, maintained at 90°C for one hour, cooled to 60°C, and a lens was released from the glass molds. The lens was then annealed at 100° for 2 hours to remove internal stress produced during the polymerization. The lens was provided on the surface with a thermosetting hard coating film. The lens had a refractive index ($n_D$20) of 1.66, and the resulting lens was nearly colorless and transparent although having a slightly grayish color due to the blue-purple color of tris-acetylacetonato-neodymium and the yellow-orange color of tris-acetylacetonato-holmium. This is because tris-acetylacetonato-neodymium acts as a dye to tris-acetylacetonato-neodymium. The spectral characteristic curve of this lens is shown in Fig.3.

(Example - 19)

In a clean room, butyraldehyde was mixed with pyridine-neodymium, and dissolved at room temperature so as to obtain 4% of polyvinylbutyral. The solution was further uniformly mixed with triethyleneglycol-di-2-ethylbutyrate as a plasticizer, then with an ultraviolet absorber in an amount of 100 ppm (about 1/3 of the normal amount) based on the total weight, and 10 ppm of yellow dyestuff Quinoline Yellow SS, and roll molded to obtain a 0.38 mm thick polyvinyl-butyral resin film. Using this film, an HPR (high penetration resistant) shatterproof glass for automobile windshield glass was fabricated.

The thus obtained HPR shatterproof glass was nearly colorless and transparent although having a slightly grayish color, and blocked light of 580 nm, with a good glare-proof effect.

Therefore, the glass can be used not only in automobile windshield glass, but also in the rear glass, headlight covers, reflectors, door mirrors, back mirrors, sunroofs, and side glass. The technology can be applied not only to automobiles, but also to aircraft, ships, and other vehicles, and the present invention includes these applications.

(Example - 20)

In a clean room as in Example-19, butyraldehyde was mixed with pyridine-neodymium, and then samarium acetate was mixed in an amount of 1% based on the total amount. Further, 10 ppm of yellow dyestuff Quinoline Yellow SS, and 100 ppm (about 1/3 of normal amount) of ethyl-2-cyano-3,3-diphenylacrylate as an ultraviolet absorber were added and mixed. The samarium compound has an infrared absorption effect, and a shatterproof glass for building exterior use was fabricated using the polyvinylbutyral as an intermediate film. The glass absorbed visible light of 580 nm and near-infrared rays of 700 nm to 2,200 nm.

A samarium compound was used in this Example, however, alternatively, infrared absorbers of metallic complex types, anthraquinone types, and phthalocyanine types can also be used. Thus, glare-proof and infrared blocking effects can be achieved even by the formation of a film on glass.

(Example - 21)

95 parts by weight of methylmethacrylate, 4 parts by weight of triethyleneglycol-dimethacrylate, 1 part by weight of tris-benzoylacetonato-neodymium, 0.2 parts by weight of azobis-(2,4-dimethylvaleronitrile), and 5 ppm of yellow dyestuff Benzidine Yellow G were thoroughly mixed, the mixture was charged in a glass tube, purging with nitrogen and deaeration were repeated, and the glass tube was sealed under vacuum. The sealed tube was heated in hot water at 30 °C for 10 hours, at 40 °C for 5 hours, at 50 °C for 5 hours, at 60 °C for 3 hours, and at 70 °C for 3 hours, and further in an air furnace at 100 °C for 2 hours for polymerization to obtain a round rod. The thus obtained round rod was cut into a contact lens.

The contact lens was nearly colorless and transparent although having a slightly grayish color, and had a low transmittance of 70% at 580 nm, and high transmittances of more than 90% for other wavelengths, with a good glare-proof effect. Furthermore, tris-benzoylacetonato-neodymium itself has an ultraviolet absorption effect, cutting wavelengths of less than 400 nm.

A dissolution test was carried out, but no dissolution was noted of tris-benzoylacetonato-neodymium and the dyestuff Benzidine Yellow G.

(Example - 22)

93 parts by weight of 2-hydroxyethylmethacrylate, 2 parts by weight of ethyleneglycol-dimethacrylate, 5 parts by weight of tris-acetylacetonato-neodymium, 0.05 parts by weight of azobis-(2,4-dimethylvaleronitrile), and 250 ppm, based on the total weight, of 2-hydroxy-4-acryloxyethoxybenzophenone as an ultraviolet absorber were mixed, and then mixed with 15 ppm of yellow dyestuff Quinoline Yellow SS. The mixture was charged in a glass tube, purging with nitrogen and deaeration were repeated, and the glass tube was sealed under vacuum. The sealed tube was heated in hot water at 30 °C for 10 hours, at 40 °C for 5 hours, at 50 °C for 5 hours, at 60 °C for 3 hours, and at 70 °C for 3 hours, and further in an air furnace at 100 °C for 2 hours for polymerization to obtain a round rod. The thus obtained round rod was cut into a contact lens. The lens was swollen in pure water, washed, dipped in physiological saline to achieve water absorption of a predetermined amount and to complete dissolution of solubles. No dyestuff or tris-acetylacetonato-neodymium was detected in the dissolved substances.

The contact lens was nearly colorless and transparent although having a slightly grayish color, and had a low transmittance of 30% at 580 nm, and high transmittances of more than 85% for other wavelengths, with a good glare-proof effect.

(Example -23)

45 parts by weight of 2,2,2-trifluoroethylmethacrylate, 40 parts by weight of tris-(trimethylsiloxy)-silylpropyl-methacrylate, 10 parts by weight of 2-hydroxyethyl-methacrylate, 3 parts by weight of ethyleneglycol-dimethacrylate, 2 parts by weight of tris-(cyclopentadienyl)-neodymium, 0.2 parts by weight of azobis-(2,4-dimethylvaleronitrile), 300 ppm based on the total weight of 2-hydroxy-4-acryloxy-ethoxybenzophenone as an ultraviolet absorber, and 10 ppm of yellow dyestuff Hanza Yellow were mixed, the mixture was charged in a glass tube, purging with nitrogen and deaeration were repeated, and the glass tube was sealed under vacuum. The sealed tube was heated in hot water at 30 °C for 10 hours, at 40 °C for 5 hours, at 50 °C for 5 hours, at 60 °C for 3 hours, and at 70 °C for 3 hours, and further in a hot air recirculation heating furnace at 100 °C for 2 hours for polymerization to obtain a round rod. The thus obtained round rod was cut into a contact lens. A dissolution test was carried out, but no dissolution was noted of tris-(cyclopentadienyl)-neodymium and the dyestuff.

The contact lens was nearly colorless and transparent although having a slightly grayish color, and had a low transmittance of 60% at 580 nm, and high transmittances of more than 90% for other wavelengths, with a good glare-proof effect.

(Example - 24)

70 parts by weight of 2,3-dihydroxypropylmethacrylate, 27 parts by weight of methylmethacrylate, 1 part by weight of ethyleneglycol-dimethacrylate, 1 part by weight of tris-(cyclopentadienyl)-neodymium, 1 part by weight of tris-acetylacetonato-erbium, 0.05 parts by weight of azobis-(2,4-dimethylvaleronitrile), and 200 ppm based on the total weight of 2-hydroxy-4-acryloxyethoxybenzophenone as an ultraviolet absorber were thoroughly mixed, the mixture was charged into a glass tube, subjected to repeated purging with nitrogen and deaeration, and the tube was sealed under vacuum. The sealed tube was heated in hot water at 30 °C for 10 hours, at 40 °C for 5 hours, at 50 °C for 5 hours, at 60 °C for 3 hours, and at 70 °C for 3 hours, and further in a hot air recirculation heating furnace at 100 °C for 2 hours for polymerization to obtain a round rod. The thus obtained round rod was cut into a contact lens. The lens was swollen in pure water, washed, dipped in physiological saline to achieve water absorption of a predetermined amount and to complete dissolution of solubles.

The contact lens was measured for visible light transmittance and had a low transmittance of 70% at 580 nm and 520 nm, and high transmittances of more than 85% for other wavelengths, with a good glare-proof effect.

(Example - 25)

70 parts by weight of 2,3-dihydroxypropylmethacrylate, 26 parts by weight of methylmethacrylate, 1 part by weight of ethyleneglycol-dimethacrylate, 3 parts by weight of tris-(2-oxy-1-naphthaldehydato)-neodymium, and 0.05 parts by weight of 2,4,6-trimethylbenzoyl-diphenylphosphine oxide were thoroughly mixed, and subjected to purging with nitrogen and deaeration. The mixture was dropped into a contact lens-forming glass mold, and irradiated with ultraviolet rays using a 80 W/cm high pressure mercury lamp from a distance of 10 cm for 100 seconds. The thus obtained contact lens was swollen in pure water, washed, dipped in physiological saline to achieve water absorption of a predetermined amount and to complete dissolution of solubles.

The contact lens had a low transmittance of 30% at 580 nm, and high transmittances of more than 85% for other wavelengths, with a good glare-proof effect.

(Example - 26)

5 parts by weight of tris-acetylacetonato-holmium, 62 parts by weight of styrene, 30 parts by weight of 2,2-bis(4-methacroyloxyethoxy-3,5-dibromophenyl)propane, 3 parts by weight of diethyleneglycol-bisallylcarbonate, 0.4 parts by weight of 2-(2'-hydroxy-5'-methylphenyl)-benzotriazole, 10 ppm of yellow dyestuff Benzidine Yellow G, and 0.4 parts by weight of lauroylperoxide were mixed under stirring. The mixture was stirred at 30 °C to increase the viscosity to 80 cps. The mixture was then filtered, band the filtrate was

injected into a space formed by a gasket made of soft polyvinylchloride and two glass molds. The result was maintained at 30°C for 4 hours, the temperature was increased linearly from 30°C to 50°C in 10 hours, then linearly from 50°C to 70°C in 2 hours, heated at 70°C for one hour and at 80°C for 2 hours, and the gasket and the glass molds were removed from the lens. The lens was then annealed at 100°C for 3 hours. The thus obtained lens had a refractive index of 1.60, was nearly colorless and transparent although having a slightly grayish color, had a low light transmittance of 30% at 580 nm, and high transmittances of more than 80% for other wavelengths. Furthermore, it completely absorbed harmful ultraviolet rays of less than 400 nm, and thus could prevent fatigue without adverse effects on the cornea and eye lens.

(Example - 27)

5 parts by weight of tris-benzoylacetonato-holmium, 62 parts by weight of styrene, 30 parts by weight of 2,2-bis(4-methacroyloxyethoxy-3,5-dibromophenyl)propane, 3 parts by weight of diethyleneglycol-bisallylcarbonate, 10 ppm of yellow iron oxide ($Fe_2O_3 \cdot H_2O$) as a yellow pigment, 0.5 parts by weight of Nippon Oil & Fats: NS-210 (polyoxyethylene-nonylphenylether) as a pigment dispersant, and 0.2 parts by weight of diisopropylperoxy-dicarbonate were mixed under stirring, and cast molded into a lens using the same procedure as in Example-17. The thus obtained lens had a refractive index of 1.59, and was nearly colorless and transparent although having a slightly grayish color, with the same glare-proof effect as obtained in Example-17. Furthermore, the lens completely absorbed harmful ultraviolet rays of less than 400 nm, and thus could prevent fatigue without adverse effects on the cornea and eye lens.

(Example - 28)

A silicone-based hard coating solution comprising 28 parts by weight of a hydrolyzed product of 3-glycidoxypropyl-trimethoxysilane, 27.5 parts by weight of silicon dioxide, 41.9 parts by weight of glycerol-polyglycidylether, 2.1 parts by weight of magnesium perchlorate, 0.5 parts by weight of 4,4'-thiobis-(3-methyl-6-t-butylphenol), and 0.1 parts by weight of dimethylsiloxane-methyl-(polyoxyethylene)- methyl-(polyoxyethylene)-methyl-(polyoxypropylene)-siloxane copolymer was mixed with 10 parts by weight of tris-benzoylacetonato-neodymium and 20 ppm of yellow dyestuff Hanza Yellow.

This solution was coated on a lens comprising polyethyleneglycol-bisallycarbonate, and heated at 100°C for one hour and then at 130°C for 2 hours to obtain an eyeglass lens. The eyeglass lens was high in surface hardness and nearly colorless and transparent although having a slightly grayish color, and had a transmittance of 60% at 580 nm and high transmittances of more than 85% for other wavelengths, with a good glare-proof effect.

(Example - 29)

| | |
|---|---|
| Bifunctional urethane-methacrylate of formula (21) | 13 parts by wt. |
| Dipentaerythritol-hexaacrylate | 30 |
| Ethyleneoxide-modified succinic acid acrylate of formula (23) | 5 |
| 2-hydroxypropyl-methacrylate | 20 |
| Isobonylacrylate | 30 |
| 2-hydroxy-2-methyl-1-phenylpropane-1-one | 2 |

100 parts by weight of an ultraviolet curing type hard coating solution comprising the above ingredients was mixed and dissolved with 10 parts by weight of tris-benzoylacetonato-neodymium. This hard coating solution was coated on a 200mm x 200mm surface-degreased, transparent polymethylmethacrylate plate, and irradiated using a 80 W/cm high-pressure mercury lamp for 30 seconds to obtain a hard coated film having a pencil hardness of 8H.

The composite was nearly colorless and transparent although having a slightly grayish color, and had a transmittance of 40% at 580 nm and high transmittances of more than 85% for other wavelengths, with a good glare-proof effect.

(23)

$$CH_2{=}CH\underset{\underset{O}{\|}}{C}OCH_2CH_2O\underset{\underset{O}{\|}}{C}CH_2{-}CH_2COOH$$

(Example - 30)

2 parts by weight of tris-acetylacetonato-neodymium, 50 parts by weight of o-chlorostyrene, 40 parts by weight of 2,2-bis(4-methacroyloxyethoxy-3,5-dibromophenyl)propane, 8 parts by weight of diethyleneglycol-bisallyl-carbonate, 0.4 parts by weight of 2-(2'-hydroxy-5'-methylphenyl) benzotriazole, 10 ppm of yellow dyestuff Quinoline Yellow SS, and 0.4 parts by weight of lauroylperoxide were mixed under stirring. The mixture was stirred at 30 °C to increased the viscosity to 80 cps. The mixture was then filtered, and the filtrate was injected into a space formed by a gasket made of soft polyvinylchloride and two glass molds (Seiko Epson: Seiko Highload MXP-1 Mild). The result was maintained at 30 °C for 4 hours, the temperature was increased linearly from 30 °C to 50 °C in 10 hours, then linearly from 50 °C to 70 °C in 2 hours, heated at 70 °C for one hour and at 80 °C for 2 hours, and the gasket and the glass molds were removed from the lens. The lens was then annealed at 100 °C for 3 hours.

When the lens was allowed to stand for one week under a high temperature and high humidity environment at a temperature of 60 °C and a humidity of 95%, the water absorption rate was as small as 1.5%. When the lens was provided on the surface with an antireflection inorganic deposition film and allowed to stand for one week under the above high temperature and high humidity environment, no occurrence of cracking was noted in the deposition film.

Whereas the lens of this Example has no significant difference from a colorless lens obtained by polymerizing the above mixture, without mixing with the neodymium complex compound and the dyestuff, using the same procedure, a significant difference was noted in reduction of glare and prevention or fatigue. Thus, in an actual wearing test, the lens of this Example had effects of reducing dazzling and pains in eyes and facilitating reading of documents on the desk.

(Example - 31)

5 parts by weight of tris-benzoylacetonato-holmium, 62 parts by weight of styrene, 30 parts by weight of 2,2-bis(4-methacroyloxyethoxy-3,5-dibromophenyl)propane, 3 parts by weight of diethyleneglycol-bisallyl-carbonate, 15 ppm of yellow iron oxide as a yellow pigment, 0.5 parts by weight of Nippon Oil & Fats: NS-210 (polyoxyethylene-nonylphenylether) as a pigment dispersant, and 0.2 parts by weight of diisopropylperoxy-dicarbonate were mixed under stirring, and cast molded into a lens using the same procedure as in Example-30. The thus obtained lens had a refractive index of 1.59, and was nearly colorless and transparent although having a slightly grayish color, with the same spectral characteristics as obtained in Example-17.

(Example - 32)

95 parts by weight of polymethylmethacrylate was melted at 200 °C, and uniformly mixed with 5 parts by weight of tris-benzoylacetonato-neodymium, 10 ppm of Chrome Yellow ($PbCrO_4$), and 0.5 parts by weight of Nippon Oil & Fats: NS-210 (polyoxyethylene-nonylphonylether) as a pigment dispersant. The mixture was cooled to room temperature, and then divided into flakes. The flakes were injected molded into a display filter.

The molding was nearly colorless and transparent although having a slightly grayish color, had a transmittance of 40% at 580 nm, blocked ultraviolet rays of less than 400 nm, reduced near-infrared rays of 1,000-1,500 nm, and had transmittances of more than 85% for other wavelengths.

When the molding was used as a display filter, it removed glare on the display, and improved the contrast without darkening the screen.

Optical equipment lenses and filters and illumination equipment covers could be fabricated using the same procedure, with the same effects.

(Example - 33)

2 parts by weight of tris-benzoylacetonato-neodymium and 2 parts by weight of tris-(8-oxyquinolinato)-neodymium were dissolved in 95 parts by weight of methylmethacrylate, and further mixed with 2 parts by weight of benzoylperoxide as a polymerization initiator, charged in a pressure vessel for a sealable tube, connected to a vacuum line, thoroughly nitrogen purged while cooling in a dryice-methanol bath, the tube was sealed, and bulk polymerized at 85 °C. The product was injection molded into a display filter. The molding was nearly colorless and transparent although having a slightly grayish color, and had absorptions at 520 nm and 580 nm. The transmittances at both wavelengths were 60%. When the molding was used as a display filter, it removed glare on the display, and improved the contrast without darkening the screen.

Optical equipment lenses and filters and illumination equipment covers could be fabricated using the same procedure, with the same effects.

(Comparative Examples)

(Comparative Example - 1)

Neodymium oxide, neodymium carbonate, neodymium chloride, neodymium nitrate, neodymium sulfate, neodymium sulfide, neodymium oxalate, neodymium acetate, and neodymium methacrylate were found to be insoluble in monomers such as styrene, divinylbenzene, phenylmethacrylate, tetrahydrofurfurylmethacrylate, methylmethacrylate, benzylmethacrylate, diallylphthalate, diethyleneglycol-bisallyl-carbonate, and o-chlorostyrene.

(Comparative Example - 2)

Any of neodymium oxide, neodymium carbonata, neodymium chloride, neodymium nitrate, neodymium sulfate, neodymium sulfide, neodymium oxalate, neodymium acetate, and neodymium methacrylate were found to be insoluble when used in place of tris-benzoylacetonato-neodymium in the photopolymerizable composition in Example-6.

(Comparative Example - 3)

100 parts by weight of diethyleneglycol-bisallyl-carbonate was mixed and dissolved with 3 parts by weight of diisopropylperoxy-dicarbonate as a polymerization initiator and 0.02 parts by weight of Tinupin P as an ultraviolet absorber.

This mixture was injected into a cast molding die comprising two glass molds and a plastic gasket, maintained in a hot air recirculation heating furnace at 40 °C for 2 hours, the temperature was increased from 40 °C to 80 °C over a period of 17 hours, further maintained at 80 °C for one hour, and decreased to 70 °C in 2 hours. The polymer was removed from the molding die, and annealed for 2 hours.

When the resulting plate-formed polymer was allowed to stand for one week under a high temperature and high humidity environment at a temperature of 60 °C and a humidity of 95%, the water absorption rate was 1.5%. This value was the same as that obtained in Example-7 where a complex compound having a glare-proof effect was used. When the lens was provided on the surface with an antireflection inorganic deposition film and allowed to stand for one week under the above high temperature and high humidity environment, no occurrence of cracking was noted in the deposition film.

(Comparative Example - 4)

3 parts by weight of neodymium acetate was dissolved in 15 parts by weight of methacrylic acid, mixed with 85 parts by weight of diethyleneglycol-bisallyl-carbonate, 3 parts by weight of diisopropylperoxy-dicarbonate as a polymerization initiator, and 0.02 parts by weight or Tinupin P as an ultraviolet absorber.

This mixture was injected into a cast molding die comprising two glass molds and a plastic gasket, maintained in a hot air recirculation heating furnace at 40 °C for 2 hours, the temperature was increased from 40 °C to 80 °C over a period of 17 hours, further maintained at 80 °C for one hour, and decreased to 70 °C in 2 hours. The polymer was removed from the molding die, and annealed for 2 hours. The resulting

plate-formed polymer had a low transmittance of 50% at 580 nm and high transmittances of more than 85% for other wavelengths, with a good glare-proof effect. However, when the plate-formed polymer was allowed to stand for one week under a high temperature and high humidity environment at a temperature of 60 ° C and a humidity of 95%, it showed a high water absorption rate of 6.0%. When the lens was provided on the surface with an antireflection inorganic deposition film and allowed to stand for one week under the above high temperature and high humidity environment, cracking took place in the deposition film.

(Comparative Example - 5)

The photopolymerizable composition used in Example-6 was injected in a cast molding die comprising two glass molds and a plastic gasket, and irradiated with ultraviolet rays of 1 x $10^5$ mJ using a 80 W/cm high-pressure mercury lamp to obtain a 2 mm thick, highly transparent plate-formed polymer.

When the resulting plate-formed polymer was allowed to stand for one week under a high temperature and high humidity environment at a temperature of 60 ° C and a humidity of 95%, the water absorption rate was 1.0%. This was the same as that of the lens obtained in Example-6 using tris-benzoylacetonato-neodymium. When the plate-formed polymer was provided on the surface with an antireflection inorganic deposition film and allowed to stand for one week under the above high temperature and high humidity environment, no occurrence of cracking was noted in the deposition film.

(Comparative Example - 6)

3 parts by weight of neodymium acetate was dissolved in 20 parts by weight of methacrylic acid, and mixed with 80 parts by weight of the photopolymerizable composition used in Example-6. The mixture was injected in a cast molding die comprising two glass molds and a plastic gasket, and irradiated with ultraviolet rays of 1 x $10^5$ mJ using a 80 W/cm high-pressure mercury lamp to obtain a 2 mm thick, highly transparent plate-formed polymer.

The plate-formed polymer had a low transmittance of 50% at 580 nm and high transmittances of more than 85% for other wavelengths, with a good glare-proof effect. However, when the plate-formed polymer was allowed to stand for one week under a high temperature and high humidity environment at a temperature of 60 ° C and a humidity of 95%, it showed a high water absorption rate of 5.0%. When the lens was provided on the surface with an antireflection inorganic deposition film and allowed to stand for one week under the above high temperature and high humidity environment, cracking took place in the deposition film.

(Comparative Example - 7)

In place of the tris-benzoylacetonato-erbium used in Example-10, 17 parts by weight of methacrylic acid and 3 parts by weight of neodymium acetate were mixed, and dissolved by heating. The solution was mixed under stirring with 40 parts by weight of o-chlorostyrene, 32 parts by weight of 2,2-bis(4-methacroyloxyethoxy-3,5-dibromophenyl)-propane, 6 parts by weight of diethyleneglycol-bisallyl-carbonate, and 0.4 parts by weight of lauroylperoxide. The mixture was polymerized using the same procedure as in Example-10. The thus obtained lens was allowed to stand for one week under a high temperature and high humidity environment at a temperature of 60 ° C and a humidity of 95%, as in Example-10. As a result, the lens of this Comparative Example-7 had about twice the water absorption rate of the lens of Example-10, and a curvature deformation occurred at the center of the negative-strength lens.

As described above, the transparent plastic material according to the present invention is obtained by polymerizing a mixture comprising a complex compound having a glare-proof effect and a dye or pigment which absorbs light of a color and wavelength which is complementary to the specific color and wavelength of light selectively absorbed by the complex compound, is nearly colorless and transparent, and has a glare-proof effect.

## Industrial Application

The transparent plastic material according to the present invention can be used to good advantage in eyeglass lenses, contact lenses, intraocular lenses, sunglasses, display filter covers, illumination equipment covers, and automobile mirrors, as well as in lenses and filters for optical devices such as cameras and the like.

## Claims

**1.** A transparent plastic material comprising a polymer obtained by polymerizing one or more types of polymerizable monomers and a polymerization initiator or a polymerization catalyst, containing a complex compound of the following Formula (I) and a dyestuff or a pigment absorptive of light of a color and wavelength which is complementary to the specific color and wavelength of light selectively absorbed by said complex compound:

$(A)_nM$ (I)

wherein M represents Sc, Y, La, Ce, Pr, Nd, Pm, Sm, Eu, Gd, Tb, Dy, Ho, Er, Tm, Yb, or Lu;

n is ordinarily 3, but n may be either 3 or 4 when M is Tb, Ce, or Pr, and n may be either 3 or 2 when M is Eu, Yb, or Sm; and

A is selected from ligands forming chelate complexes having basic structures of formulas (1) to (8) and ligands forming organic metal complexes, or n units of A form a cyclic ligand.

(1)

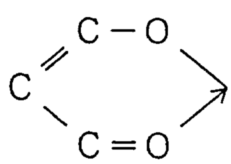

(2)

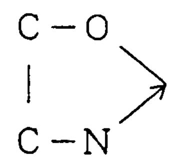

(3)

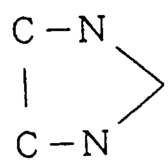

(4)

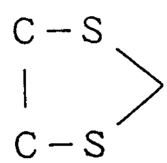

(5)

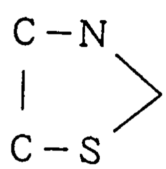

(6)

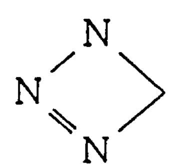

(7)

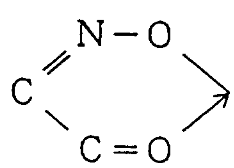

(8)

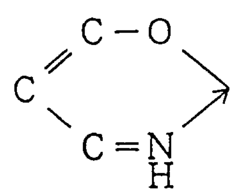

**2.** The transparent plastic material of Claim 1 wherein ligand A of said complex compound contains a polymerization reactive group.

**3.** The transparent plastic material of Claim 1 wherein ligand A of said complex compound contains at least one of an allyl group and a heterocyclic group.

**4.** The transparent plastic material of Claim 1 wherein said complex compound has a structure of formula (I-1):

wherein $R_7$, $R_8$, and $R_9$ are selected from an alkyl group, an alicyclic group, an ether group, an ester group, and a halogen atom;

M represents Sc, Y, La, Ce, Pr, Nd, Pm, Sm, Eu, Gd, Tb, Dy, Ho, Er, Tm, Yb, or Lu; and

n is ordinarily 3, but n may be either 3 or 4 when M is Tb, Ce, or Pr, and n may be either 3 or 2 when M is Eu, Yb, or Sm;

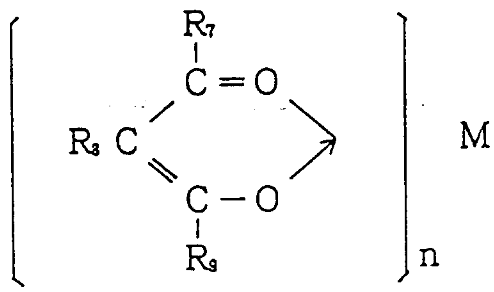

···(I−1)

**5.** The transparent plastic material of Claim 3 wherein said complex compound is represented by one of formulas (I-2) to (I-9):

wherein X represents a polymerization reactive group; R represents an alkyl group, an alicyclic hydrocarbon group, an allyl group, a heterocyclic group, an ether group, an ester group, a halogen atom, or a hydrogen atom.

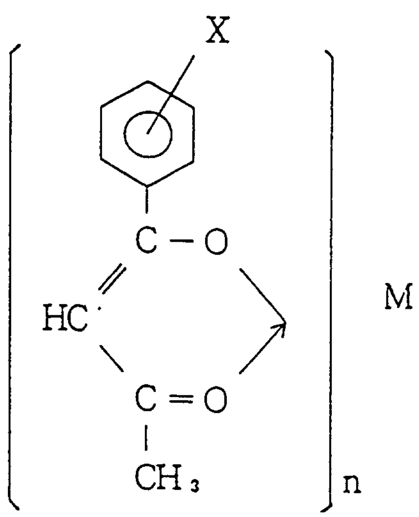

··· ( I − 2 )

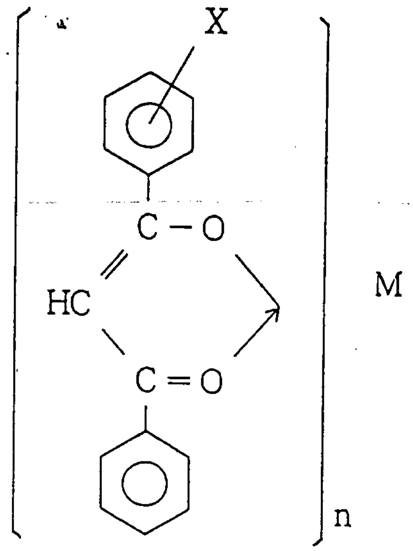

… ( I − 3 )

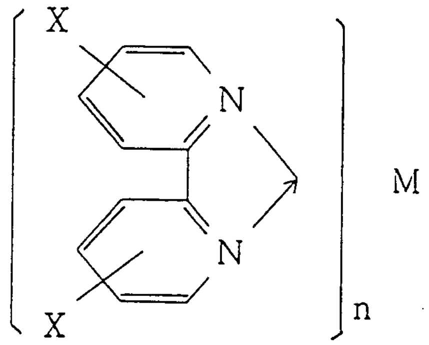

… ( I − 4 )

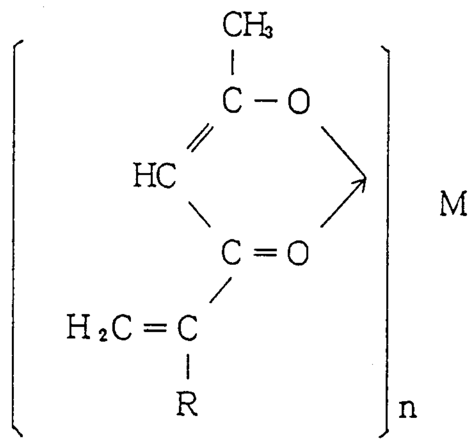

… ( I − 5 )

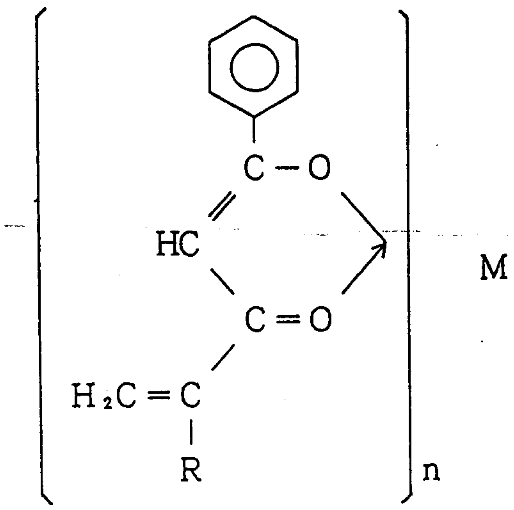

… ( I − 6 )

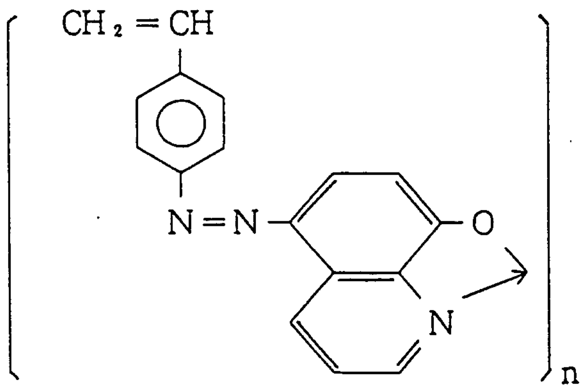

… ( I − 7 )

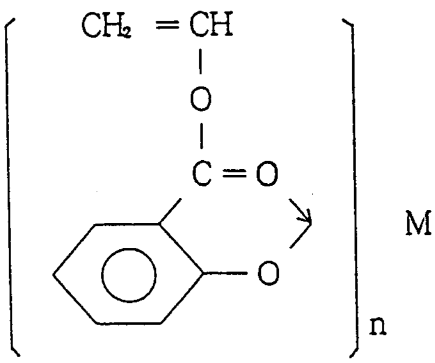

… ( I − 8 )

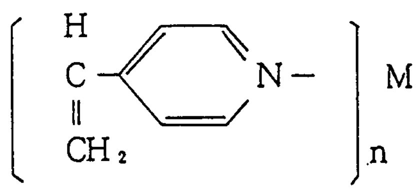

… ( I − 9 )

**6.** The transparent plastic material of Claim 3 wherein said complex compound is represented by one of formulas (I-10) to (I-32):

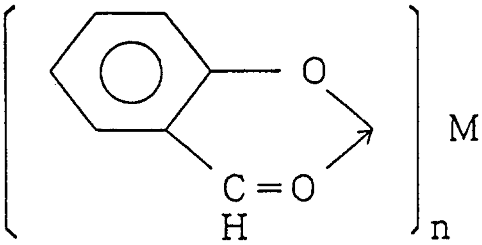

… ( I － 1 0 )

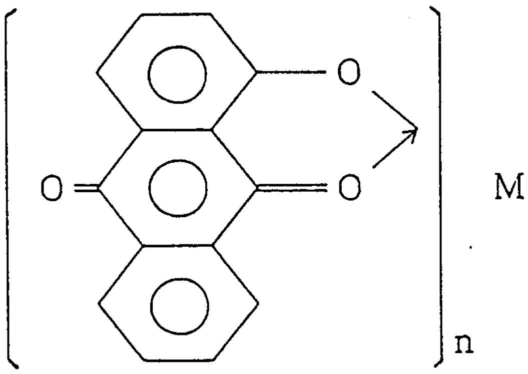

… ( I － 1 1 )

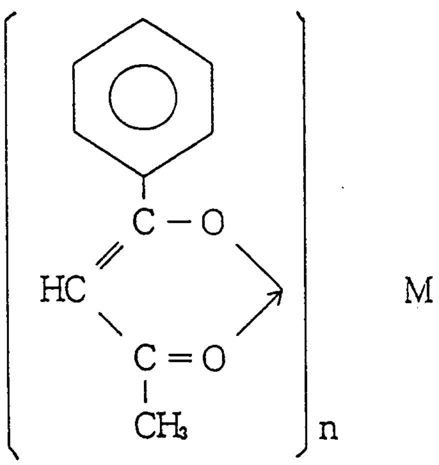

… ( I － 1 2 )

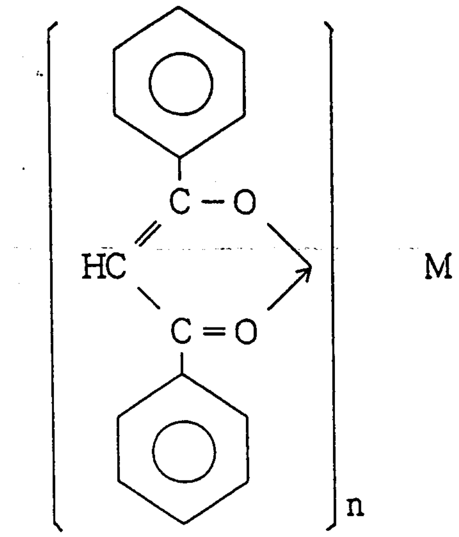

… ( I − 1 3 )

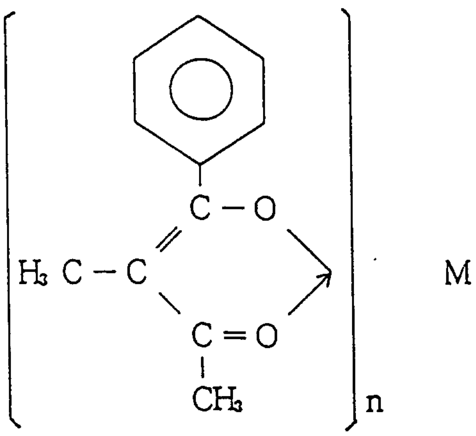

… ( I − 1 4 )

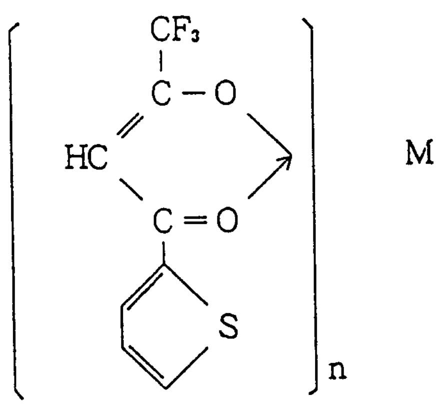

… ( I − 1 5 )

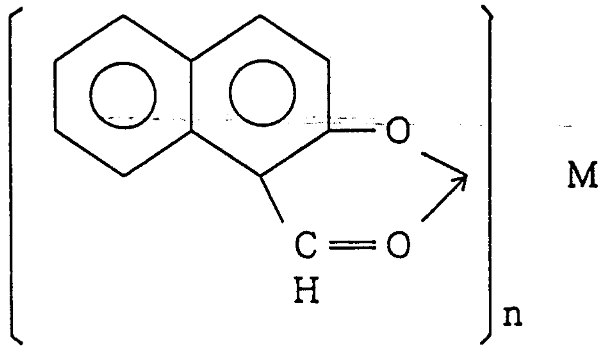

…(I－16)

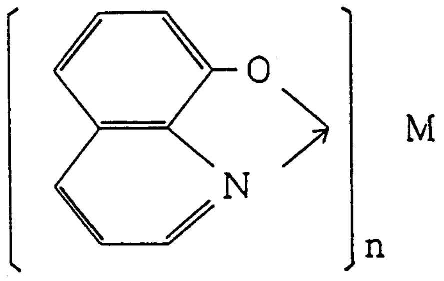

…(I－17)

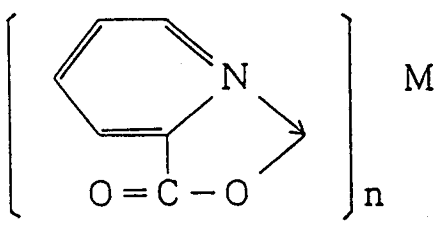

…(I－18)

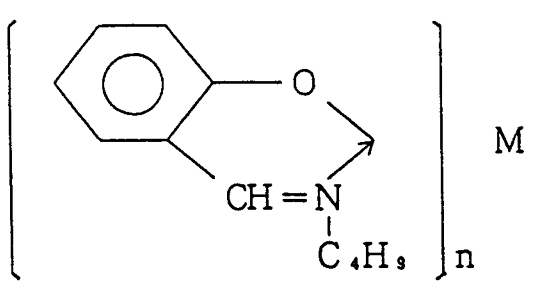

…(I－19)

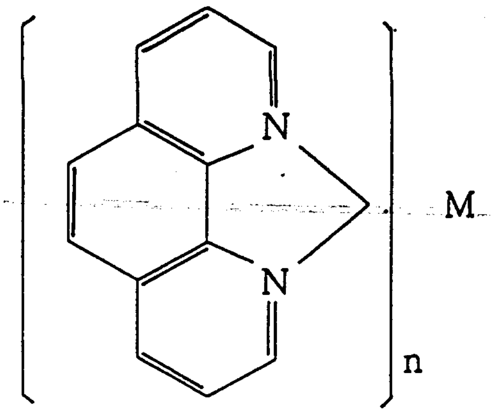

··· (I-20)

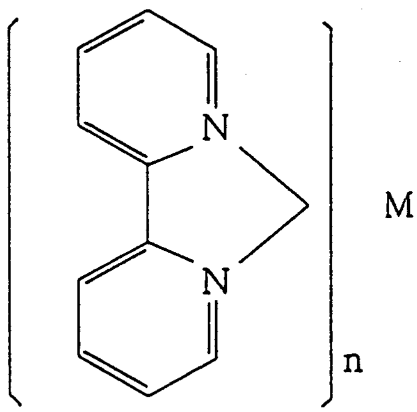

··· (I-21)

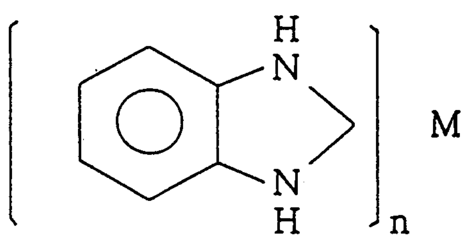

··· (I-22)

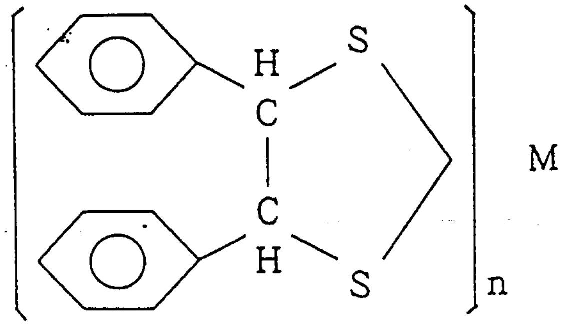

… ( I − 2 3 )

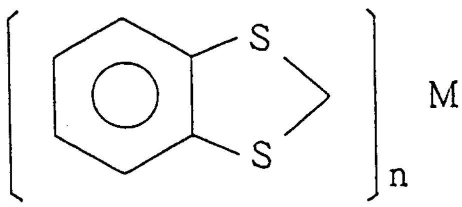

… ( I − 2 4 )

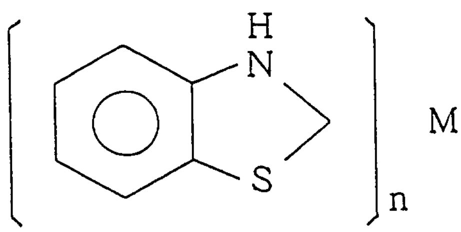

… ( I − 2 5 )

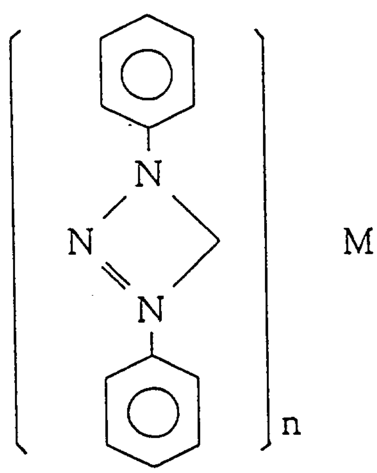

… ( I − 2 6 )

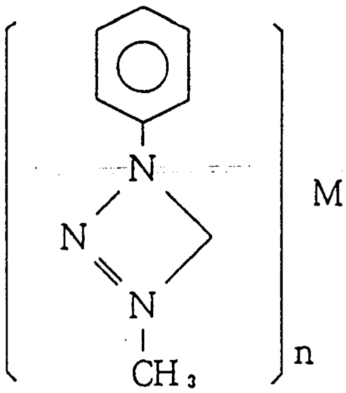

… (I－27)

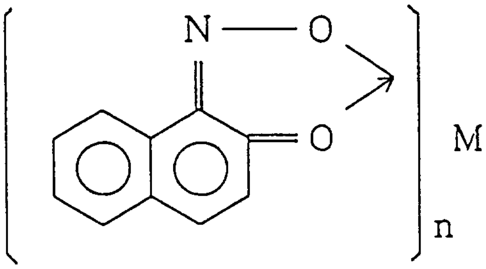

… (I－28)

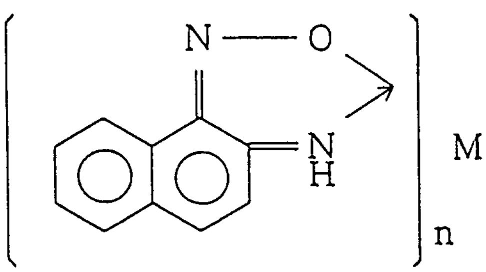

… (I－29)

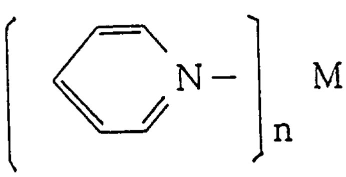

… (I－30)

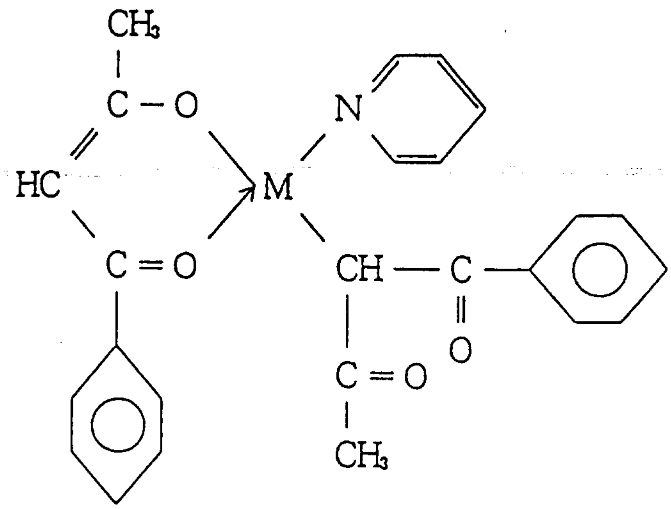

... ( I - 3 1 )

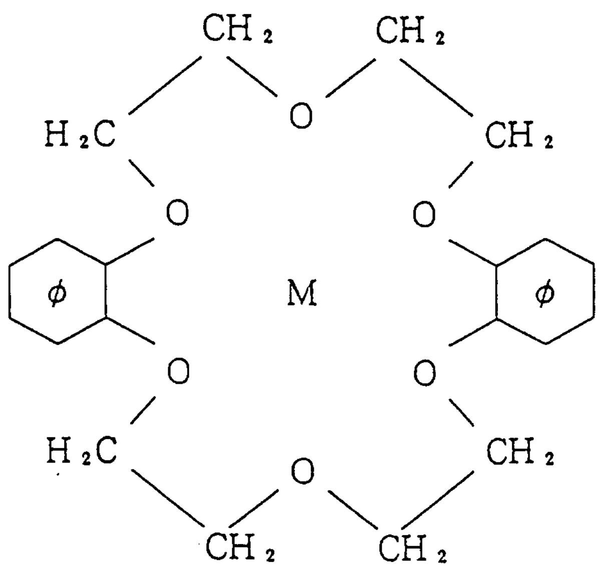

... ( I - 3 2 )

wherein 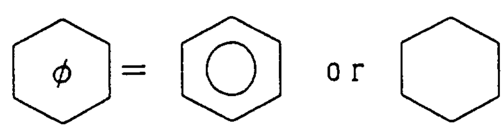

7. The transparent plastic material of any one of Claim 1 to Claim 6 further comprising an ultraviolet absorber.

8. The transparent plastic material of Claim 1 wherein said polymerizable monomer contains a radical polymerizable group.

9. The transparent plastic material of Claim 1 wherein said polymerizable monomer contains a polyaddition reactive group.

10. The transparent plastic material of Claim 1 wherein said polymerizable monomer contains a polycondensation reactive group.

**11.** An eyeglass lens comprising a transparent plastic material of any one of Claims 1 to 10.

**12.** A contact lens comprising a transparent plastic material of any one of Claims 1 to 10.

**13.** A display filter comprising a transparent plastic material of any one of Claims 1 to 10.

**14.** A lens or filter for optical equipment comprising a transparent plastic material of any one of Claims 1 to 10.

**15.** An illumination equipment cover comprising a transparent plastic material of any one of Claims 1 to 10.

FIG.1

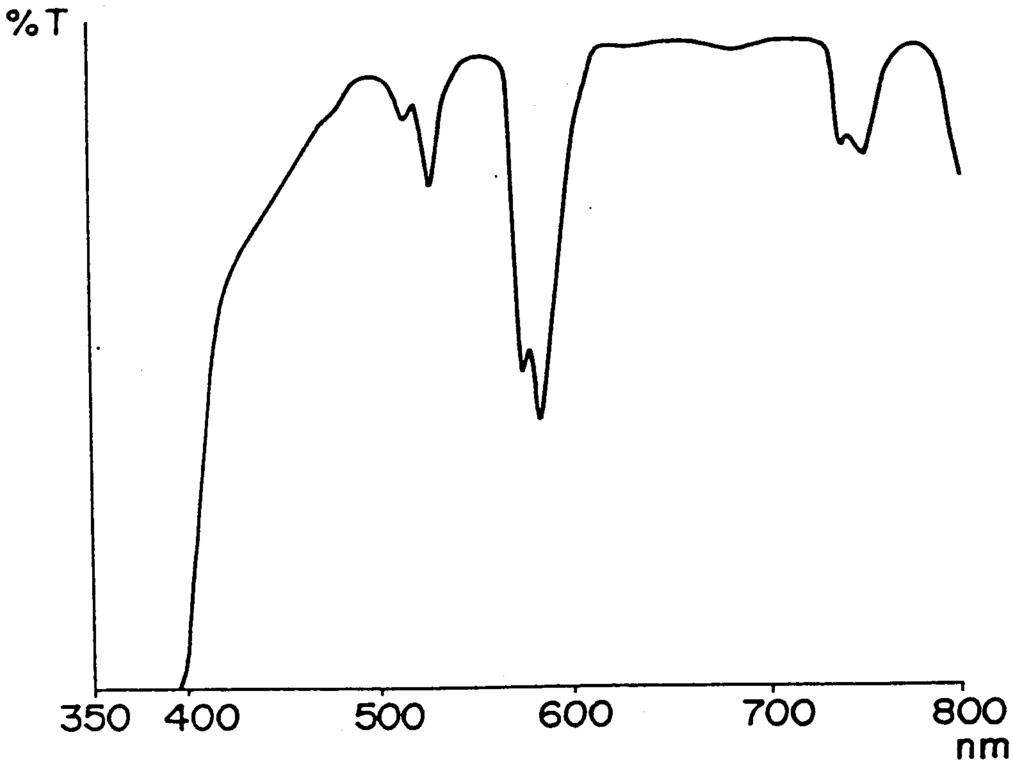

FIG.2

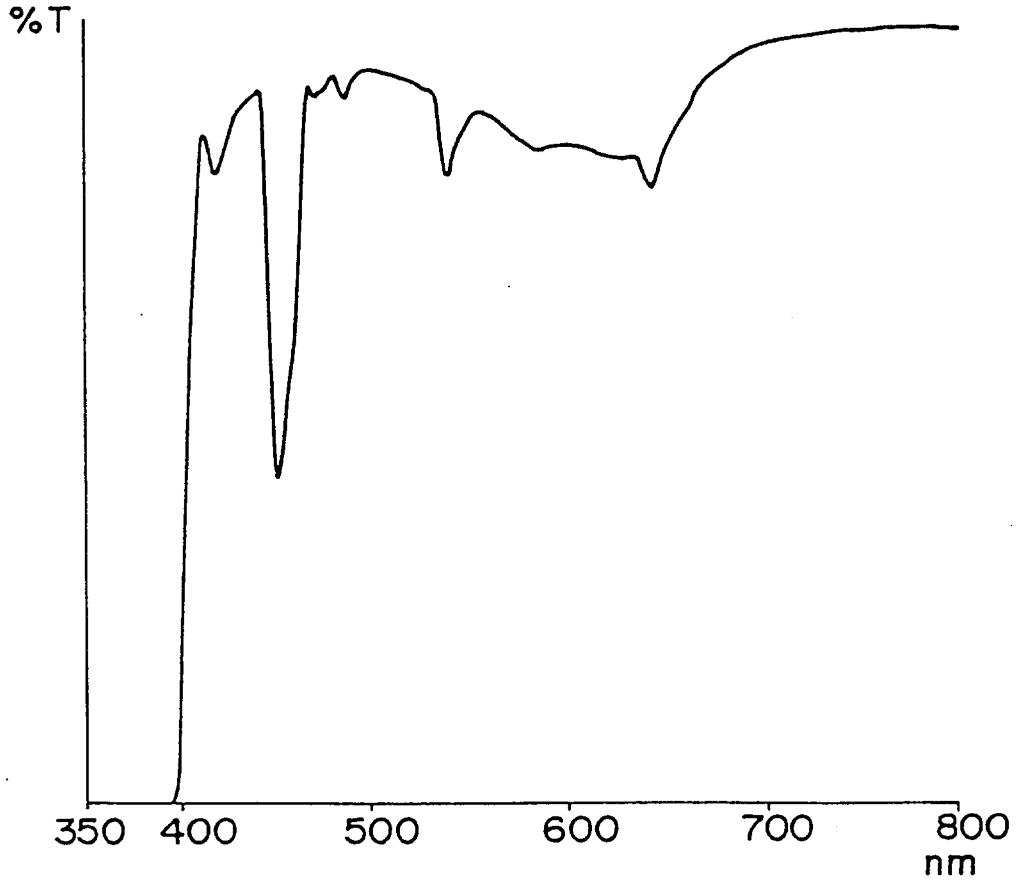

FIG.3

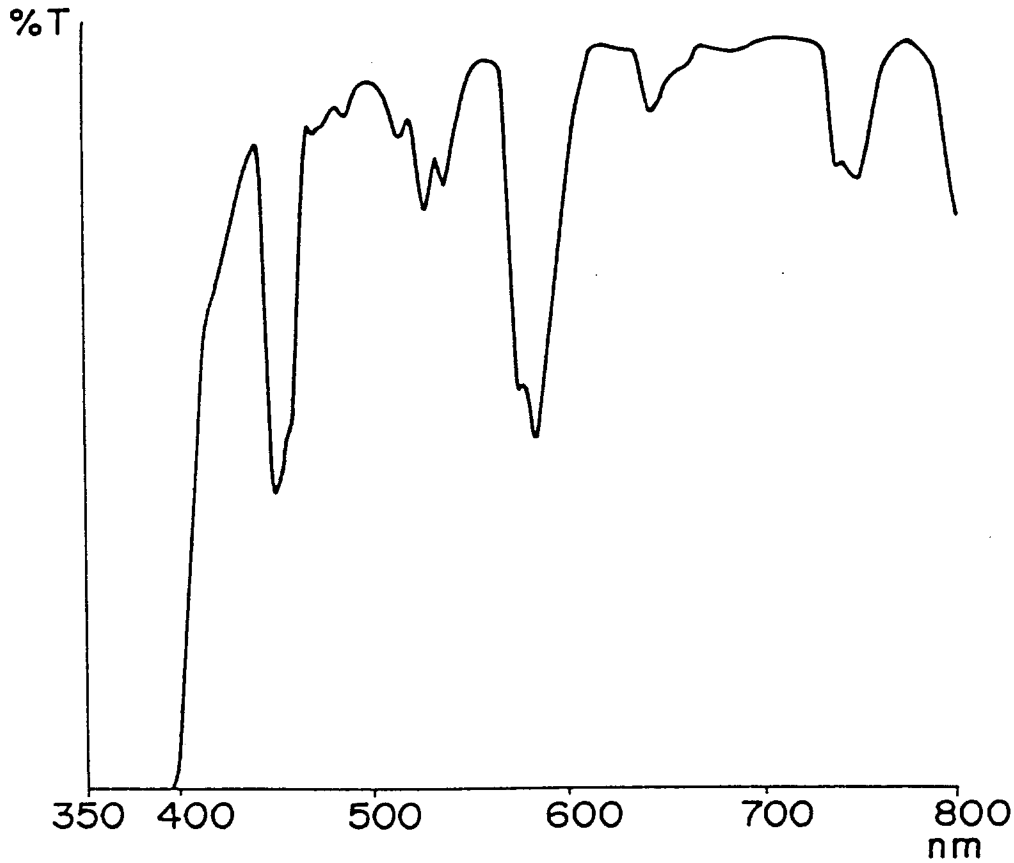

# INTERNATIONAL SEARCH REPORT

International Application No PCT/JP92/00883

**I. CLASSIFICATION OF SUBJECT MATTER** (if several classification symbols apply, indicate all) [6]

According to International Patent Classification (IPC) or to both National Classification and IPC

Int. Cl[5] C08K3/00-13/02, C08L25/00, C08L31/00, C08L33/00, C08L75/00, C08L101/00, G02B1/10

**II. FIELDS SEARCHED**

Minimum Documentation Searched [7]

| Classification System | Classification Symbols |
|---|---|
| IPC | C08K3/00-13/02, C08L25/00, C08L31/00, C08L33/00, C08L75/00, C08L101/80, G02B1/10 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 58-225148 (Mitsubishi Rayon Co., Ltd.), December 27, 1983 (27. 12. 83), Claim, lines 3 to 9, lower part, right column, page 2 & EP, A, 97527 & US, A, 4471078 DE, A, 3369147 | 1-15 |
| A | JP, A, 58-86610 (Mitsubishi Rayon Co., Ltd.), May 18, 1984 (18. 05. 84), Claim, line 7, lower part, left column to line 1, lower part, right column, page 4 (Family: none) | 1-15 |
| A | JP, A, 60-110756 (Mitsubishi Rayon June 17, 1985 (17. 06. 85), Claim, lines 2 to 14, lower part, left column, page 5 (Family: none) | 1-15 |
| A | JP, A, 60-137965 (Mitsubishi Rayon Co., Ltd.), | 1-15 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 7, 1992 (07. 09. 92) | October 6, 1992 (06. 10. 92) |
| **International Searching Authority** | **Signature of Authorized Officer** |
| Japanese Patent Office | |

FURTHER INFORMATION CONTINUED FROM THE SECOND SHEET

| | | |
|---|---|---|
| | July 22, 1985 (22. 07. 85), Claim, line 11, lower part, left column to line 4, lower part, right column, page 4 (Family: none) | |
| A | JP, A, 63-54465 (Asahi Chemical Industry Co., Ltd.), March 8, 1988 (08. 03. 88), Claim (Family: none) | 1-15 |
| A | JP, A, 62-81601 (Toray Industries, Inc.), April 15, 1987 (15. 04. 87), Claim (Family: none) | 1-15 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.